# EUROPEAN PATENT SPECIFICATION

(11) **EP 4 391 599 B1**
(45) Date of publication and mention of the grant of the patent: **11.03.2026**
(21) Application number: 22860277.7
(22) Date of filing: 12.08.2022
(51) Int. Cl.: H04L 67/141, H04W 4/08, H04W 76/11, H04W 76/14, H04W 76/40, H04W 4/70, H04W 92/18

(54) **INTER-DEVICE COMMUNICATION METHOD AND APPARATUS**
VERFAHREN UND VORRICHTUNG ZUR KOMMUNIKATION ZWISCHEN VORRICHTUNGEN
PROCÉDÉ ET APPAREIL DE COMMUNICATION ENTRE DISPOSITIFS

(30) Priority: 25.08.2021 CN 202110984188; 05.11.2021 CN 202111305009
(43) Date of publication of application: 26.06.2024
(73) Proprietor: Huawei Technologies Co., Ltd., Shenzhen, Guangdong 518129 (CN)
(72) Inventor: DOU, Fenghui, Shenzhen, Guangdong 518129 (CN); JIN, Hui, Shenzhen, Guangdong 518129 (CN)
(74) Representative: Pfenning, Meinig & Partner mbB
(86) International application number: PCT/CN2022/112001
(87) International publication number: WO 2023/024931

(56) References cited:
- WO-A1-2011/153269
- WO-A1-2020/073855
- WO-A1-2020/147044
- WO-A1-2020/150876
- WO-A1-2020/233135
- CN-A- 110 234 115
- CN-A- 110 830 925
- US-A1- 2014 348 061
- US-A1- 2021 136 555

## Description

### TECHNICAL FIELD

This application relates to the communication field, and more specifically, to a method and an apparatus for inter-device communication.

### BACKGROUND

With development of communication technologies, a user has increasing electronic devices and increasing smart home devices that can be connected to a network. Therefore, communication between personal devices (for example, remotely controlling a home device by using a mobile phone) becomes a new communication requirement.

Currently, a method for inter-device communication and interaction between a mobile phone and a smart device depend on a smart device manufacturer server. If smart devices of a user belong to different manufacturers, applications (applications, APPs) provided by the manufacturers need to be separately installed, resulting in poor user experience effect. Therefore, how to optimize inter-device communication and improve user experience has become urgent problems to be resolved.
WO2020147044A1 discloses a service authorization method, a terminal device and a network device. With regard to an NCIS service, a network device can authorize a terminal device, such that the terminal device can smoothly perform the NCIS service when needing to perform same. The service authorization method comprises: a terminal device receiving first information, wherein the first information comprises first indication information, the first indication information is used for indicating whether to allow a first service, the first service supports transmission on a sidelink direct-connection interface and a wireless interface, terminal devices under a session for the first service belong to one group, and the terminal devices in the same group are from at least one PLMN.
WO2020233135AI discloses a data processing method, apparatus and system, used for in group communication, an access network device to save a vehicle-to-everything (V2X) communication parameter of a group member device for a group control device, and successfully allocate a PC5 resource for the group member device according to the saved V2X communication parameter, so that the group member device can perform a V2X service on the allocated PC5 resource.
US2021136555A1 discloses wireless communication. In some aspects, a user equipment may provide a session request associated with establishing a proximity services (ProSe) session. The session request may include ProSe session specific information including information that indicates a ProSe service type associated with the ProSe session. The user equipment may receive a session establishment response after providing the session request. The session establishment response may include at least one of a ProSe session authorization indication associated with the UE, or ProSe policy information for the ProSe service type associated with the ProSe session. Numerous other aspects are provided.
WO2020150876A1discloses a session establishment method, a terminal device, and a network device capable of importing a session management process from a sidelink direct-connection interface to control data transmission on a sidelink. The session establishment method comprises: a first terminal device sending first information to a network device, the first information requesting establishment of a connection for a first session of the first terminal device or at least one terminal device, wherein the first session is associated with first service information, and the first session is at least applied to a sidelink direct-connection interface.

### SUMMARY

This application provides a method for inter-device communication, to optimize inter-device communication and improve user experience.

The invention is defined in the appended set of claims. According to a first aspect, the invention provides a method for inter-device communication as defined in claim 10

The method for inter-device communication includes:
The first terminal device obtains a first parameter, where the first parameter identifies a first communication group, and the first terminal device belongs to the first communication group. The first terminal device sends a first message to a first network device, where the first message includes the first parameter and a session establishment request message, the session establishment request message is used to request to establish a first session, and the first session is used by the first terminal device to communicate with a second terminal device in the first communication group. The first terminal device receives a second message from the first network device, where the second message indicates acceptance of a request for establishing the first session.

According to the method for inter-device communication, the first terminal device requests to establish the first session with the second terminal device in the first communication group to which the first terminal device belongs, so that the first terminal device and the second terminal device in the first communication group can communicate by using the first session. Terminal devices are managed in a unified manner in a form of a communication group. Therefore, inter-device communication can be optimized and user experience can be improved without depending on manufacturer servers.

With reference to the first aspect, the method further includes: The first terminal device receives a second parameter from the first network device, where the second parameter includes a parameter for describing an application, a parameter for describing the first communication group, and a route selection parameter for establishing the first session. The route selection parameter includes at least one of a network slice, a service continuity mode, a data network name, a session type, and an access type.

The first terminal device further obtains the second parameter from the first network device, and the second parameter includes the route selection parameter for establishing the first session, so that the first terminal device can establish the first session based on the second parameter. This improves accuracy of establishing the first session by the first terminal device.

With reference to the first aspect, when the application corresponding to the parameter for describing the application matches an application run by the first terminal device, and the parameter for describing the first communication group matches the first parameter, the method further includes: The first terminal device determines the route selection parameter for establishing the first session based on the application run by the first terminal device and the first parameter, where the route selection parameter for determining the first session is associated with the application run by the first terminal device and the first parameter.

According to second aspect, an apparatus of a first terminal device for inter-device communication is provided, as defined in claim 7.

According to a third aspect, the invention provides a computer-readable storage medium as defined in claim 8. Preferred embodiments are defined in the dependent claims.

### BRIEF DESCRIPTION OF DRAWINGS

FIG. 1 is a schematic diagram of an architecture of a 5G system to which an embodiment of this application is applicable;
FIG. 2 is a schematic diagram of a method for inter-device communication;
FIG. 3 is a schematic flowchart of controlling a smart device by UE;
FIG. 4A and FIG. 4B are a schematic flowchart of a method for inter-device communication according to this application;
FIG. 5A and FIG. 5B are a schematic flowchart of another method for inter-device communication according to this application;
FIG. 6 is a schematic block diagram of a communication apparatus according to an embodiment of this application; and
FIG. 7 is another schematic block diagram of a communication apparatus according to an embodiment of this application.

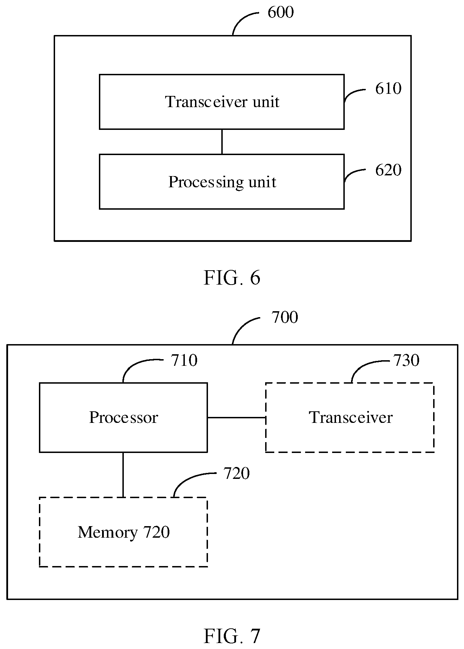

The embodiment related to the apparatus of figure 7 is not part of the claimed invention but is useful to understand the invention.

### DESCRIPTION OF EMBODIMENTS

The following describes technical solutions of this application with reference to accompanying drawings.

The technical solutions in embodiments of this application may be applied to various communication systems such as a 5th generation (5th generation, 5G) system or new radio (new radio, NR), a long term evolution (long term evolution, LTE) system, an LTE frequency division duplex (frequency division duplex, FDD) system, and LTE time division duplex (time division duplex, TDD). The technical solutions provided in this application may be further applied to a future communication system, for example, a 6th generation mobile communication system. The technical solutions in embodiments of this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), and an internet of things (internet of things, IoT) communication system or another communication system.

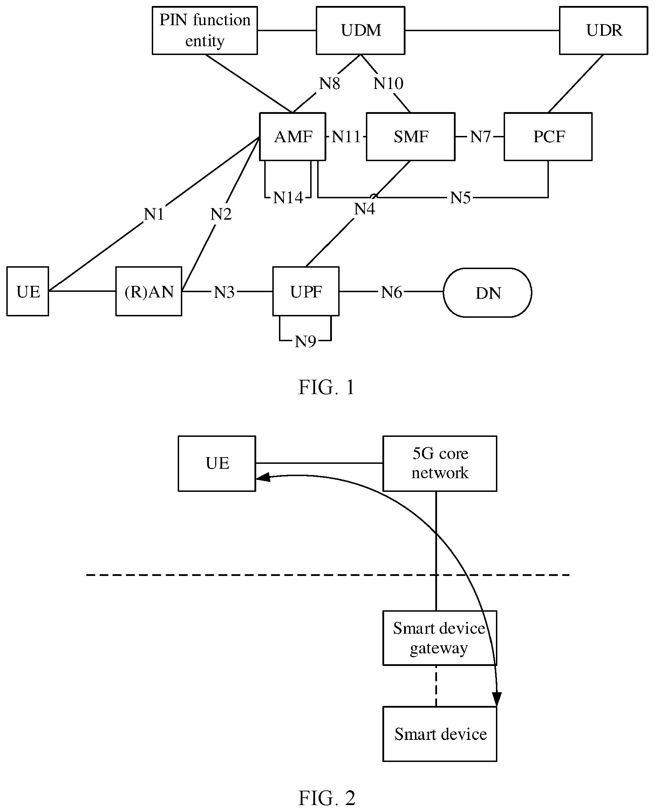

For ease of understanding embodiments of this application, a 5G system to which embodiments of this application are applicable is first briefly described with reference to FIG. 1.

It should be understood that the 5G system described in this specification is merely an example, and should not constitute any limitation on this application. A communication method provided in this application may be further applied to another system. An application scenario is not described in detail in this application.

It should be further understood that some network elements in the 5G system may communicate with each other through a service-oriented interface or a point-to-point interface. The following describes a 5G system framework based on the point-to-point interface with reference to FIG. 1. For the 5G system framework based on the service-oriented interface, refer to current descriptions in a conventional technology. This is not described in this application.

As an example for description, FIG. 1 is a schematic diagram of an architecture of the 5G system to which an embodiment of this application is applicable. FIG. 1 is a schematic diagram of a 5G network architecture based on the point-to-point interface. As shown in FIG. 1, the network architecture may include but is not limited to the following network elements (or referred to as function network elements, function entities, nodes, devices, or the like):
user equipment (user equipment, UE), a (radio) access network ((radio) access network, (R)AN) device, an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, a data network (data network, DN), unified data management (unified data management, UDM), a unified data repository (unified data repository, UDR), and a personal internet of things network function (personal IoT network function, PIN function) entity.

The following briefly describes the network elements shown in FIG. 1.
1. UE: The UE is a device that communicates with the (R)AN, and may also be referred to as a terminal device (terminal equipment), an access terminal, a subscriber unit, a subscriber station, a mobile station (mobile station, MS), a mobile terminal (mobile terminal, where MT), a remote station, a remote terminal, a mobile device, a user terminal, a terminal, a wireless communication device, a user agent, or a user apparatus. The terminal device may be a device that provides voice/data connectivity for a user, for example, a handheld device or a vehicle-mounted device with a wireless connection function. Currently, some examples of the terminal may be a mobile phone (mobile phone), a tablet computer (pad), a computer (for example, a laptop or a palmtop computer) with a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a vehicle-mounted device, a wearable device, a terminal device in a 5G network, or a terminal device in a future evolved public land mobile network (public land mobile network, PLMN).

In addition, the terminal device may alternatively be a terminal device in an internet of things (Internet of things, IoT) system. The IoT is an important part of future information technology development. A main technical feature of the IoT is to connect things to a network by using a communication technology, to implement a smart network for human-machine interconnection and thing-thing interconnection. In an IoT technology, massive connections, deep coverage, and power saving of a terminal may be implemented by using, for example, a narrowband (narrowband, NB) technology.

It should be understood that the terminal device may be any device that may access the network. The terminal device may communicate with the access network device by using an air interface technology.

Optionally, the user equipment may be used as a base station. For example, the user equipment may be used as a scheduling entity that provides a sidelink signal between user equipment in V2X, D2D, or the like. For example, a cellular phone and a car communicate with each other by using a sidelink signal. The cellular phone communicates with a smart household device without relaying a communication signal through a base station.

2. (R)AN: The (R)AN is used to provide a network access function for authorized user equipment in a specific area, and can use transmission tunnels of different quality of service based on a level of the user equipment, a service requirement, and the like.

The (R)AN can manage radio resources and provide access service for user equipment, to forward a control signal and user equipment data between the user equipment and a core network. The (R)AN may also be understood as a base station in a conventional network.

For example, the access network device in embodiments of this application may be any communication device that has a wireless transceiver function and that is configured to communicate with the user equipment. The access network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (a home evolved NodeB, HeNB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), or a transmission and reception point (transmission and reception point, TRP). Alternatively, the access network device may be a gNB or a transmission point (TRP or TP) in a 5G system such as an NR system, may be one antenna panel or a group of antenna panels (including a plurality of antenna panels) of a base station in a 5G system, or may be a network node, for example, a baseband unit (BBU) or a distributed unit (distributed unit, DU), that constitutes a gNB or a transmission point.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer eventually becomes information at the PHY layer, or is converted from the information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, or an AAU node. In addition, the CU may be classified as an access network device in an access network (radio access network, RAN), or the CU may be classified as an access network device in the core network (core network, CN). This is not limited in this application.

3. UPF network element: The UPF network element mainly includes the following user plane related functions such as data packet routing and transmission, packet detection, service usage report, quality of service (quality of service, QoS) handling, lawful intercept, uplink packet detection, and downlink data packet storage.

In a 5G communication system, a user plane network element may be a UPF network element. In a future communication system, the user plane network element may still be a UPF network element, or may have another name. This is not limited in this application.

4. DN: The DN is used to provide a network for transmitting data.

In the 5G communication system, the data network may be a DN. In the future communication system, the data network may still be a DN, or may have another name. This is not limited in this application.

5. AMF network element: The AMF network element mainly includes the following functions related to access and mobility, for example, connection management, mobility management, registration management, access authentication and authorization, reachability management, and security context management.

In the 5G communication system, an access and management network element may be an AMF network element. In the future communication system, an access and management network element may still be an AMF network element, or may have another name. This is not limited in this application.

6. SMF network element: The SMF network element is mainly configured to manage a session, allocate and manage an internet protocol (internet protocol, IP) address of a terminal device, select a termination point that can manage a user plane function and a policy control and charging function interface, and notify downlink data. In the 5G communication system, a session management network element may be an SMF network element.

In the future communication system, a session management network element may still be an SMF network element, or may have another name. This is not limited in this application.

7. PCF network element: The PCF network element is configured to: support a unified policy framework to govern network behavior, provide policy rule information for a control plane function network element (for example, an AMF network element or an SMF network element), and the like.

In the 5G communication system, a policy control network element may be a PCF network element. In the future communication system, a policy control network element may still be a PCF network element, or may have another name. This is not limited in this application.

8. UDM: The UDM may be understood as a name of a unified data management network element in a 5G architecture. The unified data management network element mainly includes the following functions: unified data management, authentication credential processing in a 3GPP authentication and key agreement mechanism, user identity processing, access authorization, registration and mobility management, subscription management, short message service management, and the like.

9. UDR: The UDR is mainly configured for storage and retrieval of subscription data, policy data, application data, and other types of data.

It may be understood that the foregoing network elements or function network elements may be network elements in a hardware device, software functions running on dedicated hardware, or virtualized functions instantiated on a platform (for example, a cloud platform).

10. PIN function: The PIN function is configured to: create and manage a PIN, including creation, updating, and deletion of the PIN; manage an identifier of the PIN, an identifier of a PIN device, a role of the PIN device in the PIN, and an IP address for inter-PIN-device communication; and manage parameters such as a slice and a data network name (data network name, DNN) of a protocol data unit (protocol data unit, PDU) session established by the PIN device.

It should be understood that the PIN function in this embodiment of this application is a logical function entity, and may be co-deployed with another network element in actual deployment, for example, co-deployed with the AMF, or co-deployed with the PCF. After the PIN function is co-deployed, interaction between the PIN function and the co-deployed network element is internal interaction.

It can be learned from FIG. 1 that interfaces between the control plane network elements in FIG. 1 are point-to-point interfaces.

In the architecture shown in FIG. 1, names and functions of the interfaces between the network elements are as follows:
(1) N1: N1 is an interface between the AMF and the terminal, and may be configured to transfer a QoS control rule or the like to the terminal.
(2) N2: N2 is an interface between the AMF and the RAN, and may be configured to transfer radio bearer control information or the like from a core network side to the RAN.
(3) N3: N3 is an interface between the RAN and the UPF, and is mainly configured to transfer uplink and downlink user-plane data between the RAN and the UPF.
(4) N4: N4 is an interface between the SMF and the UPF, and may be configured to transfer information between a control plane and a user plane, including delivering a forwarding rule, a QoS control rule, a traffic statistical rule, or the like from the control plane to the user plane, and reporting information about the user plane.
(5) N5: N5 is an interface between the AMF and the PCF, and may be configured to deliver an application service request and report a network event.
(6) N6: N6 is an interface between the UPF and the DN, and is configured to transfer uplink and downlink user data flows between the UPF and the DN.
(7) N7: N7 is an interface between the PCF and the SMF, and may be configured to deliver a PDU session granularity and a service data flow granularity control policy.
(8) N8: N8 is an interface between the AMF and the UDM, and may be configured by the AMF to obtain, from the UDM, access and mobility management-related subscription data and authentication data, configured by the AMF to register current mobility management-related information of the terminal with the UDM, and the like.
(9) N9: N9 is a user-plane interface between UPFs, and is configured to transfer uplink and downlink user data flows between the UPFs.
(10) N10: N10 is an interface between the SMF and the UDM, and may be configured by the SMF to obtain session management-related subscription data from the UDM, configured by the SMF to register current session-related information of the terminal with the UDM, and the like.
(11) N11: N11 is an interface between the SMF and the AMF, and may be configured to transfer PDU session tunnel information between the RAN and the UPF, transfer a control message sent to the terminal, transfer radio resource control information sent to the RAN, and the like.
(12) An interface between the PIN function and the UDM or the AMF may be referred to as Nx.

It should be noted that, in a possible implementation, the PIN function may be co-deployed with the another network element. For ease of description, the network element co-deployed with the PIN function is referred to as a co-deployed network element. When the PIN function is co-deployed, the interaction between the PIN function and the co-deployed network element is implemented through the internal interaction, and the interaction between the PIN function and the another network element may be implemented through the co-deployed network element. In another possible implementation, the PIN function may be separately set. When the PIN function is separately set, the interaction between the PIN function and the another network element may be performed through an interface. A name of the interface is not limited in this application.

In addition, it should be noted that the interfaces between the control plane network elements in FIG. 1 may alternatively be service-oriented interfaces. Details are not described again in this application.

It may be understood that the foregoing network elements or functions may be the network elements in the hardware device, the software functions running on the dedicated hardware, or the virtualized functions instantiated on the platform (for example, the cloud platform).

For ease of description, this application is subsequently described by using an example in which an access and management function network element is an AMF network element and a session management network element is an SMF network element. Further, the AMF network element is briefly referred to as an AMF, and the SMF network element is briefly referred to as an SMF. In other words, all AMFs described subsequently in this application may be replaced with access and management function network elements, and all SMFs may be replaced with session management network elements.

For ease of description, in this application, the communication method is subsequently described by using an example in which an apparatus is an AMF entity or an SMF entity. For an implementation method in which the apparatus is a chip in the AMF entity or a chip in the SMF entity, refer to specific descriptions in which the apparatus is the AMF entity or the SMF entity. Details are not described again.

It should be noted that names of network elements and communication interfaces between network elements in FIG. 1 are briefly described by using an example specified in a current protocol. However, this does not mean that embodiments of this application can be applied only to a currently known communication system. Therefore, a standard name that appears when the current protocol is used as an example for description is a functional description. A specific name of a network element, an interface, signaling, or the like is not limited in this application, and only indicates a function of the network element, the interface, or the signaling, and may be correspondingly extended to another system, for example, a 4G or future communication system.

In addition, it should be further noted that, in some network architectures, network function network element entities such as the AMF network element, the SMF network element, the PCF network element, and the UDM network element are all referred to as network function (network function, NF) network elements. Alternatively, in some other network architectures, a set of network elements such as the AMF network element, the SMF network element, the PCF network element, and the UDM network element may all be referred to as control plane function network elements.

FIG. 1 shows a communication system to which embodiments of this application are applicable. To facilitate understanding of the technical solutions in embodiments of this application, before the solutions in embodiments of this application are described based on the 5G architecture, some 5G terms or concepts that may be used in embodiments of this application are briefly described first.

### 1. Personal internet of things network (personal IoT network, PIN)

The personal internet of things network is a smart service system that is centered on a personal (or individual) user and in which a smart device and another information resource are connected based on a terminal device (for example, a mobile phone) of a user and according to an agreed protocol so as to meet high-quality and convenient life requirements of the user.

The internet of things is divided into the consumer internet of things and the industrial internet of things based on a demand side and a supply side. The personal internet of things network and the home internet of things network are sub-categories of the consumer internet of things. A relationship between the personal internet of things network and the home internet of things network depends on roles and scene properties of internet of things end users. A personal-centric mobile scenario is emphasized when the personal internet of things network is mentioned, and a home-user-centric weak mobile home space scenario is emphasized when the home internet of things network is mentioned. The personal internet of things network is a key mobile connection point in the internet of things. Connecting the home internet of things network and the industrial internet of things is a key foundation for the internet of everything.

### 2. Communication between personal devices

In recent years, with development of communication technologies, a user has increasing electronic devices. For example, the user has electronic devices with communication capabilities such as a mobile phone, a pad, a computer, and a watch, and has increasing smart home devices (for example, a smart lock, a smart camera, a smart display, and a smart printer) that can be connected to a network. Therefore, communication between personal devices (for example, remotely controlling a home device through a mobile phone to obtain a service provided by the device, as shown in FIG. 2) becomes a new communication requirement.

For ease of understanding, communication between personal devices is briefly described with reference to FIG. 2. FIG. 2 is a schematic diagram of a method for inter-device communication. A specific procedure includes: UE controls a smart device by using a 5G core network and a smart device gateway. The UE may be understood as a user handheld device (for example, a mobile phone), and the smart device may be understood as a home device (for example, a smart lock or a smart camera).

### 3. PIN element (PIN element)

In this application, the smart device may also be referred to as a PIN element, to be specific, the smart device may be understood as an element in the personal internet of things network.

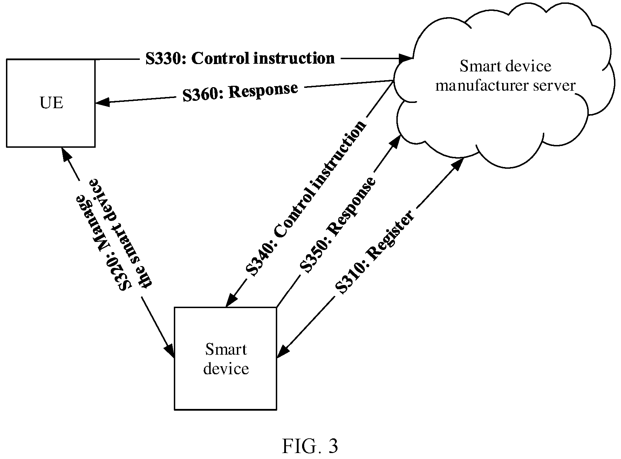

It can be learned from the foregoing description that, with development of communication technologies, optimization of communication between personal devices becomes an urgent problem to be resolved. Currently, communication between personal devices (for example, controlling the smart device by the UE) mainly includes:
A smart device provider usually releases a mobile phone application (application, APP) for managing the smart device. In addition, there is a server. A procedure in which the UE controls the smart device usually includes: The UE sends a control instruction to a device manufacturer server. Then, the device manufacturer server sends the control instruction to the target smart device, so that the UE controls the smart device. FIG. 3 is a schematic flowchart of controlling a smart device by UE. The method includes the following steps.

S310: The smart device registers with a smart device manufacturer server.

S320: An APP released by a smart device manufacturer is installed in the UE, where the APP is used to manage the smart device.

When the UE needs to send a control instruction to the smart device, the procedure shown in FIG. 3 further includes the following steps.

S330: The APP installed in the UE sends the control instruction to the smart device manufacturer server.

S340: The smart device manufacturer server sends a control instruction to the smart device.

S350: The smart device sends, to the smart device manufacturer server, a response in response to the control instruction.

S360: The smart device manufacturer server sends, to the UE, a response in response to the control instruction.

The smart device is controlled according to the foregoing procedure.

It can be learned from the procedure shown in FIG. 3 that interaction between the UE and the smart device depends on the smart device manufacturer server. If different smart devices of a user belong to different smart device manufacturer servers, APPs provided by the smart device manufacturer servers need to be installed separately. Therefore, in the method shown in FIG. 3, smart devices of different smart device manufacturer servers cannot be managed in a unified manner.

In addition, the smart device manufacturer server does not need to perform authentication on the UE that requests to control the smart device, which poses a security problem of operating the smart device or obtaining a service.

To avoid a disadvantage of the foregoing method in which the UE controls the smart device, this application provides a communication method, to optimize a communication procedure between personal devices.

A specific structure of an execution body of the method provided in embodiments of this application is not particularly limited in the following embodiments provided that a program that records code for the method provided in embodiments of this application can be run to perform communication according to the method provided in embodiments of this application. For example, the method provided in embodiments of this application may be performed by the terminal device, the core network device, or a functional module that is in the terminal device or the core network device and that can invoke and execute the program.

For ease of understanding of embodiments of this application, the following descriptions are provided.

First, in this application, "indicate" may be understood as "enable", and "enable" may include "directly enable" and "indirectly enable". When a piece of information is described to enable A, the information may directly enable A or indirectly enable A, but it does not mean that the information definitely carries A.

Information enabled by the information is referred to as to-be-enabled information. In a specific implementation process, the to-be-enabled information may be enabled in many manners. For example, but not limited to, the to-be-enabled information may be directly enabled, such as the to-be-enabled information or an index of the to-be-enabled information. Alternatively, the to-be-enabled information may be indirectly enabled by enabling other information, where there is an association relationship between the other information and the to-be-enabled information. Alternatively, only a part of the to-be-enabled information may be enabled, and other parts of the to-be-enabled information are known or agreed in advance. For example, specific information may be enabled based on a pre-agreed (for example, specified in a protocol) sequence of all information, to reduce enabling overheads to some extent. In addition, a common part of all information may be identified and enabled in a unified manner, so as to reduce enabling overheads caused by enabling the same information separately.

Second, "first", "second", and various numerical numbers (for example, "#1", and "#2") shown in this application are merely for ease of description, and are used to distinguish between objects, but are not intended to limit the scope of embodiments of this application, for example, are used to distinguish between different messages, but are not for describing a particular order or sequence. It should be understood that the objects described in this way are interchangeable in a proper circumstance, so that a solution other than embodiments of this application can be described.

Third, in this application, "preset" may include predefined, for example, defined in a protocol. "Predefined" may be implemented by pre-storing corresponding code or a corresponding table in a device (for example, user equipment or an access network device) or in another manner that can be used to indicate related information. A specific implementation of "predefined" is not limited in this application.

Fourth, "being stored" in embodiments of this application may be "being stored in one or more memories". The one or more memories may be separately disposed, or may be integrated into an encoder, a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited in this application.

Fifth, "protocols" in embodiments of this application may be standard protocols in the communication field, for example, may include a 5G protocol, a new radio (new radio, NR) protocol, and a related protocol applied to a future communication system. This is not limited in this application.

Without loss of generality, the following uses interaction between network elements as an example to describe in detail the communication method provided in embodiments of this application.

For ease of understanding, an example in which a first network device is an AMF, a second network device is an SMF, a third network device is a PCF, a fourth network device is a PIN function, a fifth network device is a UPF, a sixth network device is a UDM, and a seventh network device is a UDR is used below for description.

It should be noted that a name of the network device is not limited in this application.

For example, the first network device may be an access and mobility management function network element. The access and mobility management function network element may be an AMF or another network element that can implement an access and mobility management function.

For another example, the second network device may be a session management function network element. The session management function network element may be an SMF or another network element that can implement a session management function.

For still another example, the third network device may be a policy control function network element. The policy control function network element may be a PCF or another network element that can implement a policy control function.

For still another example, the fourth network device may be a personal internet of things network function entity. The personal internet of things network function entity may be a PIN function or another network element that can be configured to perform a PIN creation and management function.

For still another example, the fifth network device may be a user plane function network element. The user plane function network element may be a UPF or another network element that can implement a user plane function.

For still another example, the sixth network device may be a unified data management network element. The unified data management may be a UDM or another network element that can implement a data management function.

For still another example, the seventh network device may be a unified data repository network element. The unified data repository may be a UDR or another network element that can implement a data repository function.

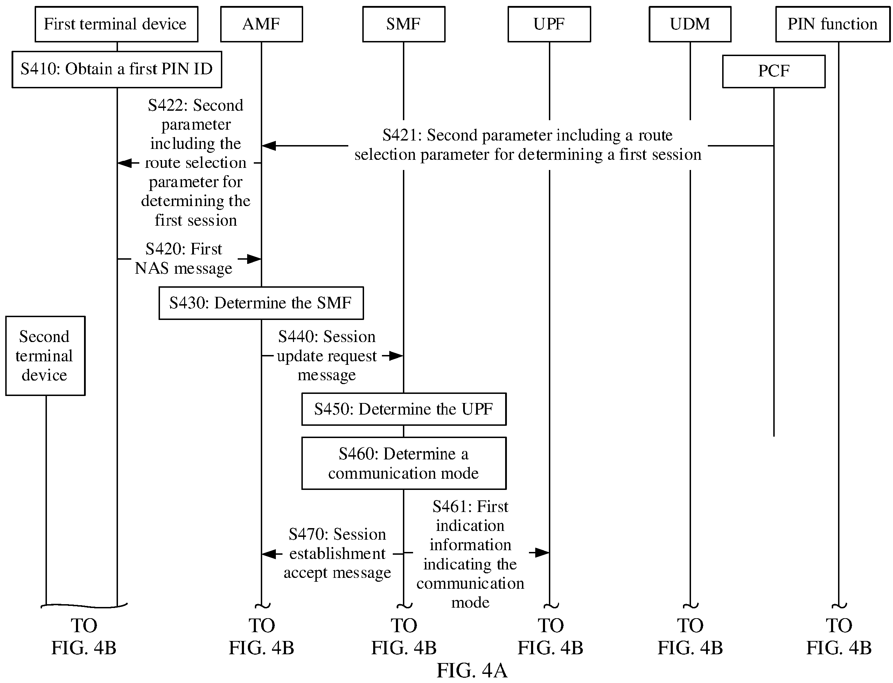

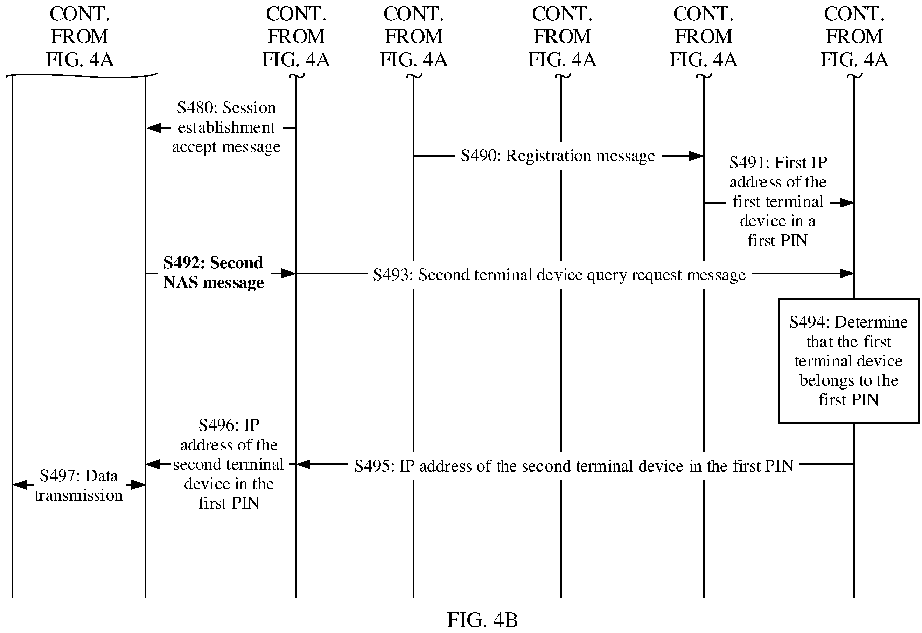

FIG. 4A and FIG. 4B are a schematic flowchart of a communication method according to this application. The method includes the following steps.

S410: A first terminal device obtains a first parameter.

The first parameter identifies a first communication group, and the first terminal device belongs to the first communication group.

For example, the first terminal device in this embodiment of this application may be a PIN element, and is a smart device in a personal internet of things network. For example, the first terminal device may be a smart household appliance, or a smart device held by a user. A specific form of the first terminal device is not limited in this embodiment of this application. All smart devices that can implement networking fall within the protection scope of this application.

For example, the first communication group may be the personal internet of things network including the first terminal device. For example, the first communication group is a first PIN.

For ease of description, a communication group may be referred to as a PIN below.

For example, the first parameter may be a parameter for identifying the first PIN, for example, a PIN identifier (PIN ID) or PIN indication information. A specific form of the first parameter is not limited in this embodiment of this application. All information that can identify the first PIN falls within the protection scope of this application. For ease of description, an example in which the first parameter is a first PIN ID is used below for description.

Specifically, that the first terminal device belongs to the first PIN may be understood as follows: The first PIN includes a plurality of terminal devices, the plurality of terminal devices are referred to as one PIN, and the plurality of terminal devices include the first terminal device.

It should be noted that, that the first terminal device belongs to the first PIN only indicates that the first PIN includes the first terminal device. However, that the first terminal device belongs to only the first PIN is not limited, and the first terminal device may further belong to another PIN. This is not limited in this application.

For example, the first PIN includes the first terminal device, a second terminal device, and a third terminal device, and a second PIN includes the first terminal device, a fourth terminal device, and a fifth terminal device. In other words, the first terminal device may belong to both the first PIN and the second PIN.

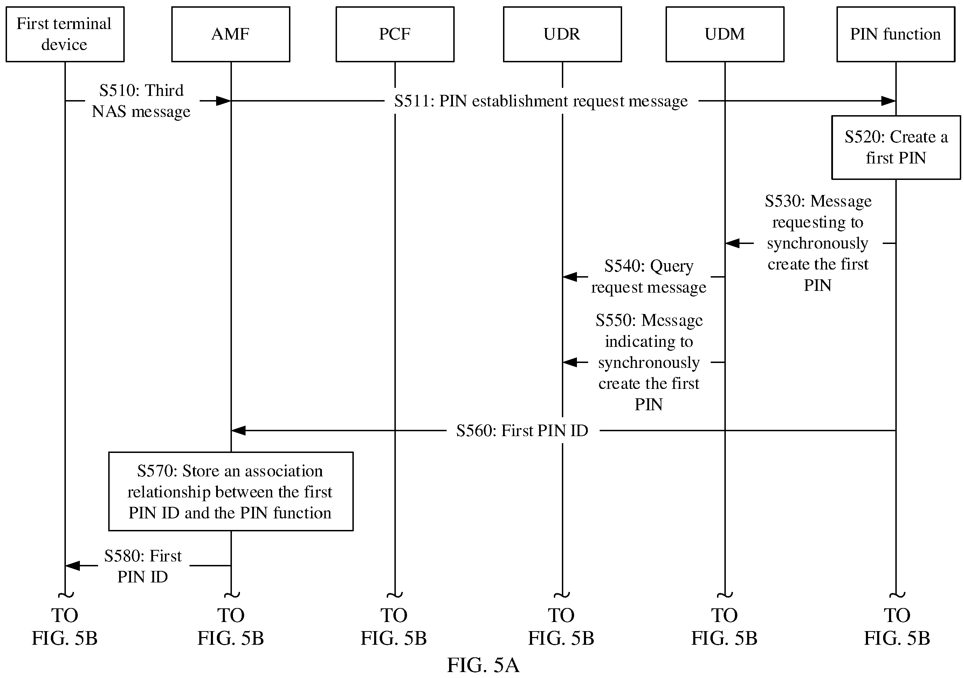

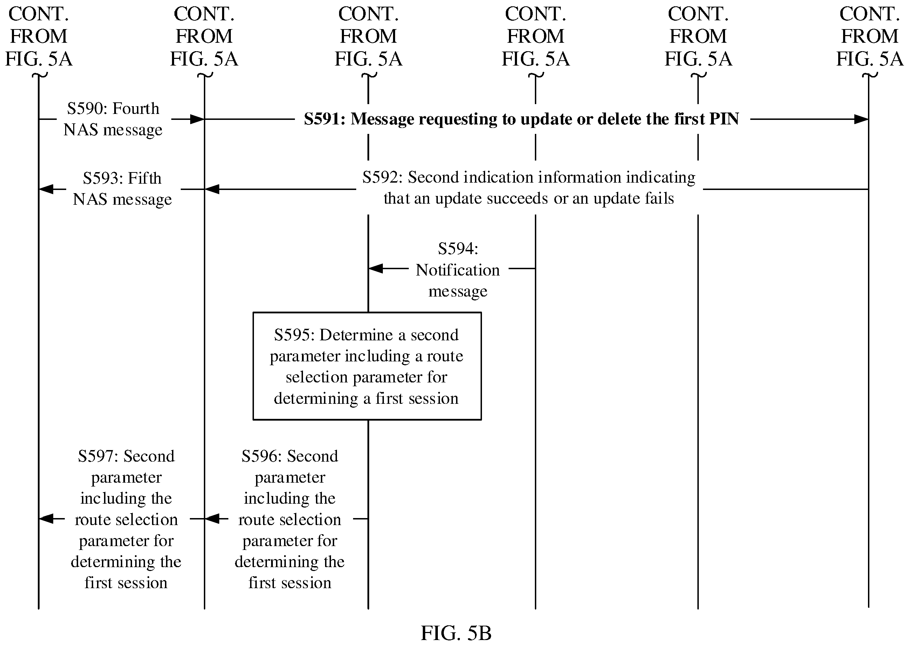

In a possible implementation, that the first terminal device obtains the first PIN ID may be that the first terminal device initiates a first PIN establishment procedure or joins a first PIN procedure, to obtain the first PIN ID from an SMF. How the first terminal device obtains the first PIN ID in the first PIN establishment procedure is described in detail below with reference to FIG. 5A and FIG. 5B. Details are not described herein.

In another possible implementation, the first terminal device may obtain the first PIN ID from another terminal device in the first PIN.

In another possible implementation, that the first terminal device obtains the first PIN ID may be that the first terminal device may obtain an identifier of the first PIN to which the first terminal device belongs from another management device.

In another possible implementation, that the first terminal device obtains the first PIN ID may be determining, in a predefined manner, an identifier of the PIN to which the first terminal device belongs.

A manner in which the first terminal device obtains the first PIN ID is not limited in this embodiment of this application.

Further, after obtaining the first PIN ID, the first terminal device may send a first message to an AMF.

Optionally, the first message may be a non-access stratum (non-access stratum, NAS) message, and is sent to the AMF through a communication interface (for example, N1) between the first terminal device and the AMF.

Optionally, the first message may alternatively be a newly added or existing message other than the NAS message between the first terminal device and the AMF.

It should be noted that if the existing message between the first terminal device and the AMF is reused as the first message, signaling overheads can be reduced.

For ease of description, an example in which the first message is a first NAS message is used below for description. The method procedure shown in FIG. 4A and FIG. 4B further includes the following step.

S420: The first terminal device sends the first NAS message to the AMF, or the AMF receives the first NAS message from the first terminal device.

The first NAS message includes the first PIN ID and a session establishment request message (for example, a PDU session establishment request). The first message is actually used to request to establish a first session, and the session establishment request message is also used to request to establish the first session.

Optionally, the first NAS message may further include an identifier (for example, a PDU session ID) of the first session.

The first session is used by the first terminal device to communicate with the second terminal device in the first PIN. The second terminal device is any terminal device in the first PIN other than the first terminal device. The second terminal device may be one or more terminal devices. For example, the first terminal device may communicate with at least one other terminal device in the first PIN by using the first session.

In this application, an example in which the "session" is a PDU session is used to describe the method. In actual application, the PDU session may alternatively be replaced with another session. This is not limited in this application.

In a possible implementation, the first NAS message includes the first PIN ID and the session establishment request message, and the session establishment request message also includes the first PIN ID. The first NAS message includes the identifier (for example, the PDU session ID) of the first session, and the session establishment request message also includes the identifier of the first session.

After receiving the first NAS message, the AMF does not need to parse the session establishment request message, and forwards the session establishment request message to the SMF.

For example, the first terminal device initiates a NAS message for establishing a PDU session, where the NAS message carries the PDU session ID, and the PDU session ID identifies the first session. The NAS message further includes an N1 container (container). For example, the N1 container is the session establishment request message (PDU session establishment request), and the PDU session establishment request includes a PIN ID and the PDU session ID. The AMF does not parse the N1 container but sends the N1 container to the SMF.

The first terminal device may determine a route selection parameter for determining the first session based on an obtained second parameter. The method procedure shown in FIG. 4A and FIG. 4B further includes the following steps.

S421: The AMF receives the second parameter from a PCF, or a PCF sends the second parameter to the AMF.

It should be noted that the second parameter is determined by the PCF. The PCF sends the second parameter to the AMF, and the AMF sends the second parameter to the first terminal device.

The second parameter includes a parameter for describing an application, a parameter for describing the first PIN, and the route selection parameter for determining the first session. The route selection parameter includes at least one of a network slice, a service continuity mode, a data network name, a session type, and an access type.

S422: The first terminal device receives the second parameter from the AMF, or the AMF sends the second parameter to the first terminal device.

When the parameter for describing the application matches an application run by the first terminal, and the parameter for describing the first PIN matches the first PIN ID, the first terminal determines the route selection parameter for determining the first session based on the application run by the first terminal and the first PIN ID. The route selection parameter for determining the first session is associated with the application run by the first terminal and the first PIN ID.

In a possible implementation, that the parameter for describing the application matches an application run by the first terminal may be understood as follows: The parameter for describing the application is the same as or partially the same as a parameter of the application run by the first terminal.

In a possible implementation, that the parameter for describing the first PIN matches the first PIN ID may be understood as follows: The parameter for describing the first PIN is the same as or partially the same as the first PIN ID.

In a possible implementation, that the route selection parameter for determining the first session is associated with the application run by the first terminal and the first PIN ID may be understood as configuring a mapping relationship: an identifier of the application run by the first terminal and the identifier of the first PIN correspond to the route selection parameter for determining the first session. For example, APP ID+PIN ID->route selection parameter.

Optionally, the service continuity mode includes a mode #1, a mode #2, and a mode #3. In the mode #1, it is ensured that an IP address of a session and a UPF remains unchanged. In the mode #2 and the mode #3, an IP address of a session may be changed by redirecting a UPF.

For example, the second parameter may be determined when the first terminal device initiates the first PIN establishment procedure or joins the first PIN. How the PCF determines the second parameter in the first PIN establishment procedure is described in detail below with reference to FIG. 5A and FIG. 5B. Details are not described herein.

After receiving the first NAS message, the AMF may determine, based on the first PIN ID included in the first NAS message, the SMF for inter-group communication of the first PIN. The method procedure shown in FIG. 4A and FIG. 4B further includes the following step.

S430: The AMF determines the SMF.

In a possible implementation, the AMF determines, based on session context of the first PIN, that the first terminal device belongs to the first PIN, and selects, as the SMF, a network device associated with a session that has been established in the first PIN.

For example, when determining that the first terminal device belongs to the first PIN, the AMF selects an SMF associated with an established PDU session in the first PIN.

In another possible implementation, the AMF may randomly select a network device as the SMF.

In still another possible implementation, the AMF may select a network device that supports inter-PIN communication as the SMF.

It should be noted that a manner in which the AMF determines the SMF is not limited in this embodiment of this application.

For example, the AMF may locally store the session context of the first PIN, or the AMF may obtain the session context of the first PIN from another network device (for example, another AMF or a UDM).

For example, the session context of the first PIN is shown in Table 1.

**Table 1**

| | | | | | |
|---|---|---|---|---|---|
| PIN ID | UE1 identifier | UE1 PDU session ID | SMF ID #1 | UPF ID #1 | IP address #1 |
| | UE2 identifier | UE2 PDU session ID | SMF ID #2 | UPF ID #2 | IP address #2 |

It can be learned from Table 1 that a PIN includes UE #1 and UE #2. An identifier of the PIN is the PIN ID, a communication address of the UE #1 in the PIN is the IP address #1, and an identifier of an established PDU session #1 of the UE #1 is the UE1 PDU session ID. The PDU session #1 is established by an SMF #1, and an identifier of the SMF #1 is the SMF ID #1. Data of the UE #1 is sent by using a UPF #1, and an identifier of the UPF #1 is the UPF ID #1. A communication address of the UE #2 in the PIN is the IP address #2, and an identifier of an established PDU session #2 of the UE #2 is the UE2 PDU session ID. The PDU session #2 is established by an SMF #2, and an identifier of the SMF #2 is the SMF ID #2. Data of the UE #2 is sent by using a UPF #2, and an identifier of the UPF #2 is the UPF ID #2. For example, the SMF #1 and the SMF #2 may be a same SMF, and the UPF #1 and the UPF #2 may be a same UPF.

After determining the SMF, the AMF sends a seventh message to the SMF, to request to establish the first session.

Optionally, the seventh message may be a session update request message.

Optionally, the seventh message may be a session establishment request message.

Optionally, the seventh message may be another message that includes the first PIN ID and the session establishment request message that are included in the first NAS message.

For ease of description, an example in which the seventh message is the session update request message is used below for description. The method procedure shown in FIG. 4A and FIG. 4B further includes the following step.

S440: The AMF sends the session update request message to the SMF, or the SMF receives the session update request message from the AMF.

The session update request message includes the first PIN ID and the session establishment request message.

For example, the session update request message is a session update request message.

The first PIN ID and the session establishment request message included in the session update request message in step S440 are the same as the first PIN ID and the session establishment request message included in the first NAS message in step S420. Details are not described herein again.

After receiving the session update request message, the SMF may determine, based on the first PIN ID included in the session update request message, a UPF for inter-group communication of the first PIN. The method procedure shown in FIG. 4A and FIG. 4B further includes the following step.

S450: The SMF determines the UPF.

For example, the SMF determines, based on the session context of the first PIN, a UPF used for communication between terminal devices in the first PIN.

In a possible implementation, the SMF may locally store the session context of the first PIN.

In another possible implementation, the SMF may obtain the session context of the first PIN from the another network device (for example, another SMF or the UDM).

For example, the session context of the first PIN is shown in Table 1. Details are not described herein again.

Further, the SMF may determine an inter-group communication mode of the first PIN based on the UPF for inter-group communication of the first PIN. The method procedure shown in FIG. 4A and FIG. 4B further includes the following step.

S460: The SMF determines the communication mode.

When the UPF (for example, the UPF #1) is the same as the UPF #2 of the PDU session that has been established in the first PIN, UPF local forwarding is performed, where the communication mode is UPF local forwarding:
For example, when the UPF #1 receives data that is to be sent by a device (for example, the first terminal device) in the first PIN to another device (for example, the second terminal device) in the first PIN, the UPF #1 directly sends the data to the another device.

Alternatively, when the UPF (for example, the UPF #1) is different from the UPF #2 of the PDU session that has been established in the first PIN, a data transmission interface (for example, an N9 interface) between the UPF #1 and the UPF #2 is created, and inter-UPF forwarding is performed, where the communication mode is inter-UPF forwarding:
For example, the first terminal device and the second terminal device belong to a same operator, but data transmission of the first terminal device is performed by the UPF #1, and data transmission of the second terminal device is performed by the UPF #2. When the UPF #1 receives data that is to be sent by a device (for example, the first terminal device) in the first PIN to another device (for example, the second terminal device) in the first PIN, the UPF #1 sends the data to the UPF #2 (for example, the data is transmitted through the N9 interface), and the UPF #2 sends the data to the another device.

When the UPF (for example, the UPF #1) is different from the UPF #2 of the PDU session that has been established in the first PIN, and no data transmission interface can be created between the UPF #1 and the UPF #2, DN forwarding is performed, where the communication mode is DN forwarding:
For example, the first terminal device and the second terminal device belong to different operators, data transmission of the first terminal device is performed by the UPF #1, and data transmission of the second terminal device is performed by the UPF #2. When the UPF #1 receives data that is to be sent by a device (for example, the first terminal device) in the first PIN to another device (for example, the second terminal device) in the first PIN, the UPF #1 sends the data to a DN (for example, the data is transmitted through an N6 interface), the DN sends the data to the UPF #2 (for example, the data is transmitted through the N6 interface), and the UPF #2 sends the data to the another device.

The foregoing different communication modes may be referred to as routing rules. For example, the routing rules are shown in Table 2:

**Table 2**

| | | |
|---|---|---|
| Source IP address #1 | Destination IP address #1 | UPF local forwarding |
| Source IP address #1 | Destination IP address #2 | Inter-UPF forwarding |
| Source IP address #1 | Destination IP address #3 | DN forwarding |

Specifically, after determining the communication mode, the SMF may notify the UPF of the communication mode, so that the UPF can learn of a data transmission mode, which facilitates subsequent data transmission. The method procedure shown in FIG. 4A and FIG. 4B may further include the following step.

S461: The SMF sends first indication information to the UPF, or the UPF receives first indication information from the SMF.

For example, the SMF may send the first indication information to the UPF by using an N4 session establishment or modification message.

Specifically, the first indication information indicates the communication mode.

For example, the first indication information is the indication information in Table 2.

A specific form of the first indication information is not limited in this embodiment of this application. All indication information that can indicate the communication mode falls within the protection scope of this application.

After the SMF determines the inter-group communication mode in the first PIN, the SMF sends a second message to the AMF. For example, the second message is a session establishment accept (PDU session establishment accept) message.

For ease of description, an example in which the second message is the session establishment accept message is used below for description. The method procedure shown in FIG. 4A and FIG. 4B further includes the following step.

S470: The SMF sends the session establishment accept message to the AMF, or the AMF receives the session establishment accept message from the SMF.

The session establishment accept message indicates to accept a request for establishing the first session.

The session establishment accept message includes the identifier (PDU session ID) of the first session.

Further, the AMF needs to send the session establishment accept message to the first terminal device, so that the first terminal device learns that establishment of the first session is allowed. The method procedure shown in FIG. 4A and FIG. 4B further includes the following step.

S480: The first terminal device receives the session establishment accept message from the AMF, or the AMF sends the session establishment accept message to the first terminal device.

After the first session is established, the SMF may register related information of the first session with the UDM, and the SMF sends a tenth message to the UDM. The tenth message is used to register the related information of the first session with the UDM.

For ease of description, an example in which the tenth message is a registration (register) message is used below for description. The method procedure shown in FIG. 4A and FIG. 4B further includes the following step.

S490: The SMF sends the registration message to the UDM, or the UDM receives the registration message from the SMF.

The tenth message includes the first PIN ID, an identifier of the first terminal device, the identifier of the first session, an identifier of the UPF, and an IP address of the first session. The IP address of the first session is an IP address allocated by the SMF and/or the UPF to the first session.

After obtaining the related information of the first session, the UDM sends a first IP address of the first terminal device in the first PIN to a PIN function. The method procedure shown in FIG. 4A and FIG. 4B further includes the following step.

S491: The UDM sends the first IP address to the PIN function, or the PIN function receives the first IP address from the UDM.

For example, the PIN function is a PIN function.

Optionally, context information that is related to the first PIN and that is stored in the PIN function is shown in Table 3:

**Table 3**

| PIN ID | Uniquely identifies the PIN |
|---|---|
| PIN group data (PIN group data) | DNN, S-NSSAI, PDU type (PDU type), and application descriptor (App descriptor) |
| PIN group membership | PIN group membership identifier (List of GPSIs), role of the PIN group membership (Role of each GPSI), and IP address of the PIN group membership (IP address of each GPSI) |

Specifically, information about an IP address of a terminal device included in the first PIN in Table 3 (for example, the IP address of each GPSI shown in Table 3) may be obtained by using the foregoing step S491. For example, in a procedure of requesting to establish a session for inter-group communication, each terminal device in the first PIN may perform the foregoing step S491. The PIN function may obtain IP addresses that are used for inter-group communication and that are of all terminal devices included in the first PIN.

A parameter other than the IP address of the terminal device included in the first PIN in Table 3 may be determined in a first PIN creation procedure. For example, the PIN group data (PIN group data) may be referred to as first PIN information, and may be determined by the PCF when creating the first PIN. For another example, the PIN group membership (PIN group membership) may be referred to as information about a terminal device in the first PIN, and may be obtained by the PIN function from the terminal device that needs to create or join the first PIN. The following provides detailed description with reference to FIG. 5A and FIG. 5B. Details are not described herein.

After the first session is established, the first terminal device may perform inter-group communication with a device in the first PIN by using the first session.

Specifically, the first terminal device sends a third message to the AMF.

Optionally, the third message may be a NAS message, and is sent to the AMF through the communication interface (for example, N1) between the first terminal device and the AMF.

Optionally, the third message may alternatively be a newly added or existing message other than the NAS message between the first terminal device and the AMF.

It should be noted that if the existing message between the first terminal device and the AMF is reused as the third message, signaling overheads can be reduced.

For ease of description, an example in which the third message is a second NAS message is used below for description. The method procedure shown in FIG. 4A and FIG. 4B further includes the following step.

S492: The first terminal device sends the second NAS message to the AMF, or the AMF receives the second NAS message from the first terminal device.

Specifically, when the first terminal device needs to communicate with the AMF, the first terminal device sends the second NAS message to the AMF.

The second NAS message is used to request to obtain an IP address of the second terminal device in the first PIN, and the second NAS message includes an identifier of the second terminal device and/or the first PIN ID.

In a possible implementation, the identifier of the second terminal device may be information indicating the second terminal device. For example, the information may be an ID of the second terminal device. For another example, the information may be function information of the second terminal device in the first PIN (for example, a device that implements a temperature adjustment function).

It should be noted that a purpose of sending the second NAS message to the AMF by the first terminal device is to send, to the PIN function, a message requesting to obtain the IP address of the second terminal device in the first PIN.

Further, after receiving the second NAS message, the AMF may send an eighth message to the PIN function, where the eighth message is used to request to obtain the IP address of the second terminal device in the first PIN.

Optionally, the eighth message may be referred to as a second terminal device query request message.

Optionally, the eighth message may alternatively be another message requesting to obtain the IP address of the second terminal device in the first PIN.

For ease of description, an example in which the eighth message is the second terminal device query request message is used below for description. The method procedure shown in FIG. 4A and FIG. 4B further includes the following step.

S493: The AMF sends the second terminal device query request message to the PIN function, or the PIN function receives the second terminal device query request message from the AMF.

For example, the second terminal device query request message may be referred to as a second terminal device query request message, and is used to request to obtain the IP address of the second terminal device in the first PIN.

The second terminal device query request message includes the identifier of the second terminal device and the first PIN ID.

For example, that the first terminal device sends the second terminal device query request message to the PIN function by using the AMF includes:

The first terminal device sends the second NAS message (for example, a NAS message) to the AMF, where the second NAS message includes the first PIN ID and the second terminal device query request message (for example, the second terminal device query request message). The second NAS message includes the first PIN ID and the identifier of the second terminal device (for example, the ID of the second terminal device). After receiving the second NAS message, the AMF does not parse the second terminal device query request message, and forwards the second terminal device query request message to the PIN function.

After receiving the second terminal device query request message, the PIN function determines that the first terminal device belongs to the first PIN. The method procedure shown in FIG. 4A and FIG. 4B further includes the following step.

S494: The PIN function determines that the first terminal device belongs to the first PIN.

Specifically, the PIN function may determine, based on the locally stored context information of the first PIN, that the first terminal device belongs to the first PIN.

When determining that the first terminal device belongs to the first PIN, the PIN function sends the IP address of the second terminal device in the first PIN to the AMF. The method procedure shown in FIG. 4A and FIG. 4B further includes the following step.

S495: The PIN function sends the IP address to the AMF, or the AMF receives the IP address from the PIN function.

The IP address is the IP address of the second terminal device in the first PIN.

It should be noted that, that the PIN function sends the IP address to the AMF includes:
The PIN function sends a second terminal device query response message to the AMF, where the second terminal device query response message includes the IP address.

After receiving the second terminal device query response message, the AMF does not parse the second terminal device query response message, and forwards the second terminal device query response message to the first terminal device by using a NAS message. The method procedure shown in FIG. 4A and FIG. 4B further includes the following step.

S496: The AMF sends the IP address to the first terminal device, or the first terminal device receives the IP address from the AMF.

After obtaining the IP address of the second terminal device, the first terminal device communicates with the second terminal device by using the first session. The method procedure shown in FIG. 4A and FIG. 4B further includes the following step.

S497: The first terminal device performs data transmission with the second terminal device.

Specifically, data transmission modes include the following several types:

### Mode 1:

To-be-transmitted data of the first terminal device is sent to the UPF #1, and the UPF #1 forwards the data to the second terminal device.

### Mode 2:

To-be-transmitted data of the first terminal device is sent to the UPF#1, the UPF#1 forwards the data to the UPF #2 through the N9 interface, and then the UPF #2 forwards the data to the second terminal device.

### Mode 3:

To-be-transmitted data of the first terminal device is sent to the UPF#1, and the UPF#1 forwards the data to the DN through the N6 interface. Then, the DN forwards the data to the UPF #2 through the N6 interface. Finally, the UPF #2 forwards the data to the second terminal device.

With reference to FIG. 4A and FIG. 4B, the foregoing describes the procedure in which the first terminal device establishes the inter-group communication with the device in the first PIN. It can be learned from the foregoing descriptions that the first terminal device belongs to the first PIN. The following describes a procedure in which the first terminal device requests to create the first PIN with reference to FIG. 5A and FIG. 5B. FIG. 5A and FIG. 5B are a schematic flowchart of a PIN creation method according to an embodiment of this application. A first terminal device may request to establish the first PIN by sending a fourth message to an AMF.

Optionally, the fourth message may be a NAS message, and is sent to the AMF through a communication interface (for example, N1) between the first terminal device and the AMF.

Optionally, the fourth message may alternatively be a newly added or existing message other than the NAS message between the first terminal device and the AMF.

It should be noted that if the existing message between the first terminal device and the AMF is reused as the fourth message, signaling overheads can be reduced.

For ease of description, an example in which the fourth message is a third NAS message is used below for description. The method procedure 5 shown in FIG. 5A and FIG. 5B includes the following step.

S510: The first terminal device sends the third NAS message to the AMF, or the AMF receives the third NAS message from the first terminal device.

The third NAS message includes a PIN establishment request message, and the PIN establishment request message is used to request to establish the first PIN.

For example, the third NAS message may be a NAS message. The first terminal device sends the NAS message to the AMF, where the NAS message includes the PIN establishment request message (for example, a PIN creation request). After the AMF receives the NAS message, the AMF sends the PIN establishment request message to a PIN function to request the PIN function to establish the first PIN. The method procedure shown in FIG. 5A and FIG. 5B further includes the following step.

S511: The AMF sends the PIN establishment request message to the PIN function, or the PIN function receives the PIN establishment request message from the AMF.

For example, after receiving the third NAS message, the AMF does not need to parse the PIN establishment request message included in the third NAS message, and forwards the PIN establishment request message to the PIN function.

Optionally, the third NAS message and/or the PIN establishment request message further include/includes a third parameter, and the third parameter indicates a function of the first terminal device in the first PIN.

For example, the function of the first terminal device in the first PIN includes: The first terminal device is used as a gateway device in the first PIN, the first terminal device is used as a management device in the first PIN, and/or the first terminal device is used as a common communication device in the first PIN.

For example, the first PIN includes a plurality of UEs, and UE in the plurality of UEs may be used as a smart device gateway (for example, the smart device gateway shown in FIG. 2). The smart device gateway may be referred to as a smart device with a gateway capability (PIN element with gateway capability).

For another example, the first PIN includes a plurality of UEs, and UE in the plurality of UEs may be used as a smart device manager (for example, the UE may relay data of other UEs). The smart device manager may be referred to as a smart device with a management capability (PIN element with management capability).

For still another example, the first PIN includes a plurality of UEs, and at least one UE in the plurality of UEs is used as common UE (for example, the at least one device is added to the PIN as a common communication device). The common UE may be referred to as a (PIN element).

Optionally, the third NAS message further includes an identifier of the first terminal device.

In a possible implementation, that the third NAS message further includes an identifier of the first terminal device may be that the identifier of the first terminal device is located outside the PIN establishment request message, in other words, the PIN establishment request message may not include the identifier of the first terminal device.

For example, the third NAS message includes a temporary identifier or a permanent identifier or another external identifier of the first terminal device. The AMF can determine the first terminal device based on an identifier of the UE, and send the identifier of the first terminal device and the PIN establishment request message to the PIN function.

In another possible implementation, that the third NAS message further includes an identifier of the first terminal device may be that the identifier of the first terminal device is located in the PIN establishment request message, in other words, the identifier of the first terminal device may not be included outside the PIN establishment request message.

For example, the PIN establishment request message includes a permanent identifier or another external identifier of the first terminal device, and the AMF can forward the PIN establishment request message to the PIN function.

In still another possible implementation, that the third NAS message further includes an identifier of the first terminal device may be that the identifier of the first terminal device is located in the PIN establishment request message and the identifier of the first terminal device is located outside the PIN establishment request message.

For example, the third NAS message includes a temporary identifier or a permanent identifier or another external identifier of the first terminal device, and the PIN establishment request message includes the permanent identifier or the another external identifier of the first terminal device. In this case, the AMF can determine the identifier of the first terminal device based on the identifier of the first terminal device, and send the identifier of the first terminal device and the PIN establishment request message to the PIN function.

It should be noted that, from a perspective of saving signaling overheads and simplifying an operation of a core network device, the identifier of the first terminal device may be carried in the PIN establishment request message. In this way, the AMF directly forwards the PIN establishment request message to the PIN function without determining, based on the identifier of the first terminal device located outside the PIN establishment request message, the identifier of the first terminal device that needs to be sent to the PIN function.

Further, after receiving the PIN establishment request message, the PIN function may accept a request of the first terminal device for creating the first PIN, create the first PIN, and allocate a first PIN ID for identifying the first PIN to the first PIN. The method procedure shown in FIG. 5A and FIG. 5B further includes the following step.

S520: The PIN function creates the first PIN.

It should be noted that, for the newly created first PIN, the PIN function needs to allocate the first PIN ID for identifying the first PIN to the first PIN.

The PIN function may provide a related parameter of the first PIN to a UDM, and the PIN function sends an eleventh message to the UDM, where the eleventh message is used to request to synchronously create the first PIN.

For ease of description, an example in which the eleventh message is a message requesting to synchronously create the first PIN is used below for description. The method procedure shown in FIG. 5A and FIG. 5B further includes the following step.

S530: The PIN function sends the message requesting to synchronously create the first PIN to the UDM, or the UDM receives the message requesting to synchronously create the first PIN from the PIN function.

The message requesting to synchronously create the first PIN includes the first PIN ID, information about the first PIN, and information about a terminal device located in the first PIN.

The information about the first PIN includes information for inter-group communication of the first PIN and information about an application managed by the first PIN.

Optionally, the information about the first PIN and the information about the terminal device located in the first PIN that are included in the message requesting to synchronously create the first PIN are respectively the PIN group data and the PIN group membership in Table 3.

For example, the information for inter-group communication of the first PIN includes information such as a DNN, S-NSSAI, and a session type (for example, a PDU type) for inter-group communication of the first PIN.

For example, the information (for example, App descriptor) about the application managed by the first PIN includes information such as a PIN APP ID and a triplet.

For example, the information about the terminal device located in the first PIN includes information (for example, a list of GPSIs or a role of each GPSI) about a device added to the PIN.

Specifically, after obtaining the related parameter of the first PIN, the UDM may obtain subscription information of the first terminal device from a UDR, and determine whether the first PIN can be synchronously established for the first terminal device. The UDM sends a twelfth message to the UDR, where the twelfth message is used to query the subscription information of the first terminal device.

Optionally, the twelfth message may be a query request (query request) message.

Optionally, the twelfth message may alternatively be another message for querying the subscription information of the first terminal device.

For ease of description, an example in which the twelfth message is the query request message is used below for description. The method procedure shown in FIG. 5A and FIG. 5B further includes the following step.

S540: The UDM sends the query request message to the UDR, or the UDR receives the query request message from the UDM.

After the UDM determines that the first PIN can be established for the first terminal device, the UDM sends a thirteenth message to the UDR, to indicate to synchronously create the first PIN.

Optionally, the thirteenth message may be a message indicating to synchronously create the first PIN.

Optionally, the thirteenth message may alternatively be another message indicating to synchronously create the first PIN.

For ease of description, an example in which the thirteenth message is the message indicating to synchronously create the first PIN is used below for description. The method procedure shown in FIG. 5A and FIG. 5B further includes the following step.

S550: The UDM sends the message indicating to synchronously create the first PIN to the UDR, or the UDR receives the message indicating to synchronously create the first PIN from the UDM.

The message indicating to synchronously create the first PIN includes the identifier of the first terminal device, an internal identifier, and the information about the first PIN.

For the newly created first PIN, the UDM needs to allocate an internal first PIN identifier (for example, the internal identifier) to the first PIN.

For example, the internal identifier only needs to be stored inside a network, and does not need to be delivered to the first terminal device. The internal identifier is associated with the first PIN ID (for example, there is an internal identifier for one PIN, and a first PIN ID corresponding to the internal identifier).

Further, after the first PIN is created, an identifier (for example, the first PIN ID) of the created first PIN needs to be delivered to the first terminal device. The method procedure shown in FIG. 5A and FIG. 5B further includes the following steps.

S560: The PIN function sends the first PIN ID to the AMF.

S570: The AMF stores an association relationship between the first PIN ID and the PIN function.

If the first PIN ID includes an identifier of the PIN function, the AMF may not generate the association relationship between the first PIN ID and the PIN function in a process of creating the first PIN. In a subsequent session establishment procedure (the procedure shown in FIG. 4A and FIG. 4B), after receiving the first PIN ID, the AMF can determine the corresponding PIN function based on the identifier of the PIN function included in the first PIN ID. Therefore, the association relationship between the first PIN ID and the PIN function does not need to be additionally stored.

S580: The AMF sends the first PIN ID to the first terminal device.

In addition, in a possibility, after the first PIN is created, the first terminal device may further request to update or delete the first PIN.

Optionally, after the first PIN is created, the first terminal device may send a fifth message to the AMF.

The fifth message may be a NAS message, and is sent to the AMF through the communication interface (for example, N1) between the first terminal device and the AMF.

Optionally, the fifth message may alternatively be a newly added or existing message other than the NAS message between the first terminal device and the AMF.

It should be noted that if the existing message between the first terminal device and the AMF is reused as the fifth message, signaling overheads can be reduced.

For ease of description, an example in which the fifth message is a fourth NAS message is used below for description.

In this possibility, the method procedure shown in FIG. 5A and FIG. 5B further includes the following step.

S590: The first terminal device sends the fourth NAS message to the AMF, or the AMF receives the fourth NAS message from the first terminal device.

The fourth NAS message is used to request to update or delete the created first PIN.

Further, after receiving the fourth NAS message, the AMF may send a ninth message to the PIN function to request to update or delete the first PIN.

For ease of description, an example in which the ninth message is a message requesting to update or delete the first PIN is used below for description. The method procedure shown in FIG. 5A and FIG. 5B further includes the following step.

S591: The AMF sends, to the PIN function, the message requesting to update or delete the first PIN, or the PIN function receives, from the AMF, the message requesting to update or delete the first PIN.

The message requesting to update or delete the first PIN includes the first PIN ID, and the message requesting to update or delete the first PIN is used to request to update or delete the first PIN.

For example, that the first terminal device sends, to the PIN function by using the AMF, the message requesting to update or delete the first PIN includes:

The first terminal device sends the fourth NAS message (for example, a NAS message) to the AMF, where the fourth NAS message includes the message (for example, a PIN deletion/update request) requesting to update or delete the first PIN. After the AMF receives the fourth NAS message, the AMF sends, to the PIN function, the message requesting to update or delete the first PIN, to request the PIN function to update or delete the created first PIN.

Specifically, after receiving the fourth NAS message, the AMF does not need to parse the message requesting to update or delete the first PIN included in the fourth NAS message, and forwards the message requesting to update or delete the first PIN to the PIN function.

Optionally, when the fourth NAS message is used to request to update the first PIN, the fourth NAS message further includes operation indication information for adding or deleting a terminal device and an identifier of the added or deleted terminal device.

Optionally, when the message requesting to update or delete the first PIN is used to request to update the first PIN, the message requesting to update or delete the first PIN further includes operation indication information for adding or deleting a terminal device and an identifier of the added or deleted terminal device.

Optionally, the fourth NAS message further includes the first PIN ID, to indicate the AMF to send the fourth NAS message to the PIN function associated with the first PIN ID. If the fourth NAS message does not carry the first PIN ID, the AMF selects a PIN function to send the message requesting to update or delete the first PIN.

It should be noted that the first PIN ID may be allocated by the PIN function, and includes the identifier of the PIN function and a part for identifying the first PIN in the PIN function. Alternatively, the AMF may determine the PIN function based on an identifier of a PCF in the first PIN ID, and forwards the message requesting to update or delete the first PIN to the determined PIN function.

It should be noted that, for a process of updating or deleting a PIN, an indication indicating that an update succeeds or an update fails, or an indication indicating that deletion succeeds or deletion fails is delivered in the foregoing processes of S560 to S590. The method procedure shown in FIG. 5A and FIG. 5B further includes the following step.

S592: The AMF receives second indication information from the PIN function, or the PIN function sends second indication information to the AMF.

The second indication information is information indicating that an update succeeds or an update fails, or information indicating that deletion succeeds or deletion fails.

Further, the AMF may notify, by using a sixth message, the first terminal device that the update succeeds or the update fails, or that the deletion succeeds or the deletion fails.

Optionally, the sixth message may be a NAS message, and is sent to the first terminal device through the communication interface (for example, N1) between the first terminal device and the AMF.

Optionally, the sixth message may alternatively be a newly added or existing message other than the NAS message between the first terminal device and the AMF.

It should be noted that if the existing message between the first terminal device and the AMF is reused as the sixth message, signaling overheads can be reduced.

For ease of description, an example in which the sixth message is a fifth NAS message is used below for description. The method procedure shown in FIG. 5A and FIG. 5B further includes the following step.

S593: The first terminal device receives the fifth NAS message from the AMF, or the AMF sends the fifth NAS message to the first terminal device.

The fifth NAS message responds to the fourth NAS message. The fifth NAS message includes the information indicating that the update succeeds or the update fails, or the fifth NAS message includes the information indicating that the deletion succeeds or the deletion fails.

Further, after establishment of the first PIN is completed, the PCF needs to update a route selection policy of the first terminal device. The method procedure shown in FIG. 5A and FIG. 5B further includes the following steps.

S594: The UDR sends a notification message to the PCF, or the PCF receives a notification message from the UDR.

The notification message includes the identifier of the first terminal device, the first PIN ID, and the information about the first PIN.

S595: The PCF determines a second parameter.

The second parameter includes a parameter for describing an application, a parameter for describing the first PIN, and a route selection parameter for determining a first session.

The first session is used by the first terminal device to communicate with a second terminal device in the first PIN, and the route selection parameter includes at least one of a network slice, a service continuity mode, a data network name, a session type, and an access type.

S596: The PCF sends the second parameter to the AMF.

S597: The AMF sends the second parameter to the first terminal device.

It may be understood that the PCF sends the second parameter to the first terminal device by using the AMF.

Specifically, that an SMF sends the second parameter to the first terminal device by using the AMF includes the following two manners:

### Manner 1:

The SMF sends a PIN URSP to the first terminal device by using the AMF, where the PIN URSP is an enhanced URSP, and a PIN descriptor is added compared with a URSP in a procedure in which no PIN creation is involved. An App descriptor and the PIN descriptor are used to determine a PDU parameter.

A group descriptor (or the PIN descriptor) is added to the URSP. If the URSP includes the group descriptor, the application descriptor (the foregoing parameter for describing the application) and the group descriptor (the foregoing parameter for describing the first PIN) need to be matched at the same time, as shown in the following Table 4:

**Table 4**

| Information name | Description | Category | PCF permitted to modify in a UE context | Scope |
|---|---|---|---|---|
| Rule precedence (Rule Precedence) | Determines an order an URSP rule is enforced in UE | Mandatory | Yes | UE context |
| Traffic descriptor (Traffic descriptor) | This part defines traffic descriptor components for the URSP rule | Mandatory | | |
| Application descriptors (Application descriptors) | It consists of an operating system identifier and an application identifier | Optional | Yes | UE context |
| IP descriptors (IP descriptors) | IP address or IPv6 network prefix, port number, and protocol ID of the protocol above IP | Optional | Yes | UE context |
| Group descriptor (Group descriptor) | This part defines group descriptor components for the URSP rule | Optional | Yes | UE context |
| PIN descriptor (PIN descriptor) | PIN ID | Optional | Yes | UE context |
| List of route selection descriptors (List of Route Selection Descriptors) | A list of route selection descriptors | Mandatory | | |

### Manner 2:

The SMF sends a PIN rule (the foregoing parameter for describing the first PIN) to the first terminal device by using the AMF. The PIN rule includes parameters such as a DNN and a slice that are used to establish a PDU session for PIN communication.

The PIN rule may be delivered to the first terminal device as a separate parameter, and is not used to enhance a URSP.

It should be understood that, sequence numbers of the foregoing processes do not mean execution sequences. The execution sequences of the processes should be determined based on functions and internal logic of the processes, and should not be construed as any limitation on the implementation processes of embodiments of this application.

It should be further understood that in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that in some of the foregoing embodiments, a device in an existing network architecture is mainly used as an example for description (for example, a network device and a terminal device). It should be understood that a specific form of the device is not limited in embodiments of this application. For example, all devices that can implement a same function in the future are applicable to embodiments of this application.

It may be understood that, in the foregoing method embodiments, the methods and the operations implemented by the devices (such as the first terminal device, the second terminal device, a first core network element, and a service provider) may alternatively be implemented by components (for example, chips or circuits) of the devices.

The foregoing describes in detail the methods for relay communication provided in embodiments of this application with reference to FIG. 4A and FIG. 4B and FIG. 5A and FIG. 5B. The foregoing methods for relay communication are mainly described from a perspective of interaction between network elements. It may be understood that to implement the foregoing functions, each network element includes a corresponding hardware structure and/or software module for performing each function.

A person skilled in the art may be aware that, with reference to units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

The following describes in detail apparatuses for relay communication provided in embodiments of this application with reference to FIG. 6 and FIG. 7. It should be understood that descriptions of apparatus embodiments correspond to the descriptions of the method embodiments. Therefore, for content that is not described in detail, refer to the foregoing method embodiments. For brevity, some content is not described again.

In embodiments of this application, the transmit end device or the receive end device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into modules is an example, and is merely logical function division. In actual implementation, another division manner may be used. An example in which each functional module is obtained through division based on each corresponding function is used below for description.

FIG. 6 is a schematic block diagram of an apparatus 600 according to an embodiment of this application. The apparatus 600 includes a transceiver unit 610 and a processing unit 620. The transceiver unit 610 may implement a corresponding communication function, and the processing unit 620 is configured to perform data processing. The transceiver unit 610 may also be referred to as a communication interface or a communication unit. When the transceiver unit 610 implements an information obtaining function, the transceiver unit 610 may also be referred to as an obtaining unit.

Optionally, the apparatus 600 may further include a storage unit. The storage unit may be configured to store instructions and/or data. The processing unit 620 may read the instructions and/or the data in the storage unit, so that the apparatus implements the foregoing method embodiments.

The apparatus 600 may be configured to perform actions performed by the devices (such as the foregoing core network elements and the foregoing terminal devices) in the foregoing method embodiments. In this case, the apparatus 600 may be a device or a component that can be configured in the device. The transceiver unit 610 is configured to perform operations related to receiving and sending of the device in the foregoing method embodiment, and the processing unit 620 is configured to perform operations related to device processing in the foregoing method embodiment.

In a design, the apparatus 600 is configured to perform actions performed by the first terminal device in the foregoing method embodiment.

The transceiver unit 610 is configured to obtain a first parameter, where the first parameter identifies a first communication group, and the apparatus for inter-device communication belongs to the first communication group.

The transceiver unit 610 is configured to send a first message to a first network device, where the first message includes the first parameter and a session establishment request message, the session establishment request message is used to request to establish a first session, and the first session is used by the apparatus for inter-device communication to communicate with a second terminal device in the first communication group.

The transceiver unit 610 is configured to receive a second message from the first network device, where the second message indicates to accept a request for establishing the first session.

Optionally, the transceiver unit 610 is further configured to receive a second parameter from the first network device, where the second parameter includes a parameter for describing an application, a parameter for describing the first communication group, and a route selection parameter for determining the first session. The route selection parameter includes at least one of a network slice, a service continuity mode, a data network name, a session type, and an access type.

Optionally, when the application corresponding to the parameter for describing the application matches an application run by the apparatus for inter-device communication, and the parameter for describing the first communication group matches the first parameter, the apparatus further includes: the processing unit 620, configured to determine the route selection parameter for determining the first session based on the application run by the apparatus for inter-device communication and the first parameter, where the route selection parameter for determining the first session is associated with the application run by the apparatus for inter-device communication and the first parameter.

Optionally, the transceiver unit 610 is further configured to send a third message to the first network device, where the third message is used to request to obtain an internet protocol IP address, and the IP address is an IP address of the second terminal device in the first communication group.

The transceiver unit 610 is further configured to receive the IP address from the first network device, where the third message includes an identifier of the second terminal device and the first parameter.

Optionally, the transceiver unit 610 is further configured to send a fourth message to the first network device, where the fourth message includes a communication group establishment request message, and the communication group establishment request message is used to request to establish the first communication group.

The transceiver unit 610 is further configured to receive the first parameter from the first network device.

Optionally, the transceiver unit 610 is further configured to send a fifth message to the first network device, where the fifth message is used to request to update or delete the first communication group, and the fifth message includes the first parameter.

The transceiver unit 610 is further configured to receive a sixth message from the first network device in response to the fifth message, where the sixth message includes information indicating that an update succeeds or an update fails, or the sixth message includes information indicating that deletion succeeds or deletion fails.

Optionally, the transceiver unit 610 is further configured to communicate with the second terminal device by using the first session.

The apparatus 600 may implement corresponding steps or procedures performed by the first terminal device in the method embodiment in embodiments of this application. The apparatus 600 may include units configured to perform the method performed by the first terminal device in the method embodiment. In addition, the units in the apparatus 600 and the foregoing other operations and/or functions are separately used to implement corresponding procedures performed by the first terminal device in the method embodiment.

When the apparatus 600 is configured to perform the method in FIG. 4A and FIG. 4B, the transceiver unit 610 may be configured to perform receiving and sending steps in the method, for example, steps S410, S420, S422, S480, S492, S496, and S497, and the processing unit 620 may be configured to perform processing steps in the method.

When the apparatus 600 is configured to perform the method in FIG. 5A and FIG. 5B, the transceiver unit 610 may be configured to perform receiving and sending steps in the method, for example, steps S510, S580, S590, S593, and S597, and the processing unit 620 may be configured to perform processing steps in the method.

It should be understood that a specific process in which the units perform the foregoing corresponding steps is described in detail in the foregoing method embodiments, and for brevity, details are not described herein.

In another design, the apparatus 600 is configured to perform actions performed by the first network device in the foregoing method embodiment.

The transceiver unit 610 is configured to receive a first message from a first terminal device, where the first message includes a first parameter and a session establishment request message, the session establishment request message is used to request to establish a first session, the first parameter identifies a first communication group, the first terminal device belongs to the first communication group, and the first session is used by the first terminal device to communicate with a second terminal device in the first communication group.

The transceiver unit 610 is further configured to send a seventh message to a second network device, where the seventh message includes the first parameter and the session establishment request message.

The transceiver unit 610 is further configured to receive a second message from the second network device, where the second message indicates to accept a request for establishing the first session. The transceiver unit is further configured to send the second message to the first terminal device.

Optionally, the processing unit 620 is configured to determine the second network device based on the first parameter.

Optionally, the transceiver unit 610 is further configured to receive a second parameter from a third network device, where the second parameter includes a parameter for describing an application, a parameter for describing the first communication group, and a route selection parameter for determining the first session. The route selection parameter includes at least one of a network slice, a service continuity mode, a data network name, a session type, and an access type. The sending unit is further configured to send the second parameter to the first terminal device.

Optionally, the transceiver unit 610 is further configured to receive a third message from the first terminal device, where the third message includes an identifier of the second terminal device and the first parameter, the third message is used to request to obtain an internet protocol IP address, and the IP address is an IP address of the second terminal device in the first communication group.

The transceiver unit 610 is further configured to send an eighth message to a fourth network device, where the eighth message includes the identifier of the second terminal device and the first parameter.

The transceiver unit 610 is further configured to receive the IP address from the fourth network device. The sending unit is further configured to send the IP address to the first terminal.

Optionally, the transceiver unit 610 is further configured to receive a fourth message from the first terminal device, where the fourth message includes a communication group establishment request message, and the communication group establishment request message is used to request to establish the first communication group.

The transceiver unit 610 is further configured to send the communication group establishment request message to the fourth network device.

The transceiver unit 610 is further configured to receive the first parameter from the fourth network device. The sending unit is further configured to send the first parameter to the first terminal.

Optionally, the transceiver unit 610 is further configured to receive a fifth message from the first terminal, where the fifth message is used to request to update or delete the first communication group, and the fifth message includes the first parameter.

The transceiver unit 610 is further configured to send a ninth message to the fourth network device, where the ninth message includes the first parameter, and the ninth message is used to request to update or delete the first communication group.

The transceiver unit 610 is further configured to receive, from the fourth network device, information indicating that an update succeeds or an update fails, or information indicating that deletion succeeds or deletion fails.

The transceiver unit 610 is further configured to send, to the first terminal, a sixth message in response to the fifth message, where the sixth message includes the information indicating that the update succeeds or the update fails, or the sixth message includes the information indicating that the deletion succeeds or the deletion fails.

The apparatus 600 may implement corresponding steps or procedures performed by the first network device in the method embodiment in embodiments of this application. The apparatus 600 may include units configured to perform the method performed by the first network device in the method embodiment. In addition, the units in the apparatus 600 and the foregoing other operations and/or functions are separately used to implement corresponding procedures performed by the first network device in the method embodiment.

When the apparatus 600 is configured to perform the method in FIG. 4A and FIG. 4B, the transceiver unit 610 may be configured to perform receiving and sending steps in the method, for example, steps S420, S421, S422, S440, S470, S480, S492, S493, S495, and S496, and the processing unit 620 may be configured to perform processing steps in the method, for example, step S430.

When the apparatus 600 is configured to perform the method in FIG. 5A and FIG. 5B, the transceiver unit 610 may be configured to perform receiving and sending steps in the method, for example, steps S510, S511, S580, S590, S591, S593, S592, S596, and S597, and the processing unit 620 may be configured to perform processing steps in the method, for example, step S570.

It should be understood that a specific process in which the units perform the foregoing corresponding steps is described in detail in the foregoing method embodiments, and for brevity, details are not described herein.

In still another design, the apparatus 600 is configured to perform actions performed by the second network device in the foregoing method embodiment.

The transceiver unit 610 is configured to receive a seventh message from a first network device, where the seventh message includes a first parameter and a session establishment request message, and the session establishment request message is used to request to establish a first session.

The transceiver unit 610 is further configured to send a second message to the first network device, where the second message is used to accept a request for establishing the first session, the first parameter identifies a first communication group, a first terminal device belongs to the first communication group, and the first session is used by the first terminal device to communicate with a second terminal device in the first communication group.

Optionally, the processing unit 620 is configured to determine a communication mode between the first terminal device and the second terminal device, where the communication mode includes any one of the following: data between the first terminal device and the second terminal device is transmitted by using a fifth network device; data between the first terminal device and the second terminal device is transmitted by using two fifth network devices, where the data is transmitted between the two fifth network devices through a communication interface; or data between the first terminal device and the second terminal device is forwarded by using a data network.

Optionally, the transceiver unit 610 is further configured to send first indication information to the fifth network device, where the first indication information indicates the communication mode.

Optionally, the processing unit 620 is configured to determine the fifth network device based on the first parameter.

Optionally, the transceiver unit 610 is further configured to send a tenth message to a sixth network device, where the tenth message includes the first parameter, an identifier of the first terminal device, an identifier of the first session, an identifier of the fifth network device, and an internet protocol IP address of the first session.

The apparatus 600 may implement corresponding steps or procedures performed by the second network device in the method embodiment in embodiments of this application. The apparatus 600 may include units configured to perform the method performed by the second network device in the method embodiment. In addition, the units in the apparatus 600 and the foregoing other operations and/or functions are separately used to implement corresponding procedures performed by the second network device in the method embodiment.

When the apparatus 600 is configured to perform the method in FIG. 4A and FIG. 4B, the transceiver unit 610 may be configured to perform receiving and sending steps in the method, for example, steps S440, S461, S470, and S490, and the processing unit 620 may be configured to perform processing steps in the method, for example, steps S450 and S460.

It should be understood that a specific process in which the units perform the foregoing corresponding steps is described in detail in the foregoing method embodiments, and for brevity, details are not described herein.

In still another design, the apparatus 600 is configured to perform actions performed by the third network device in the foregoing method embodiment.

The transceiver unit 610 is configured to receive a notification message from a seventh network device, where the notification message includes an identifier of a first terminal device, a first parameter, and information about a first communication group, the first parameter identifies the first communication group, and the first terminal device belongs to the first communication group.

The processing unit 620 is configured to determine a second parameter based on the notification message, where the second parameter includes a parameter for describing an application, a parameter for describing the first communication group, and a route selection parameter for determining a first session, and the first session is used by the first terminal device to communicate with a second terminal device in the first communication group. The route selection parameter includes at least one of a network slice, a service continuity mode, a data network name, a session type, and an access type.

Optionally, the transceiver unit 610 is further configured to send the second parameter to a first network device.

The apparatus 600 may implement corresponding steps or procedures performed by the third network device in the method embodiment in embodiments of this application. The apparatus 600 may include units configured to perform the method performed by the third network device in the method embodiment. In addition, the units in the apparatus 600 and the foregoing other operations and/or functions are separately used to implement corresponding procedures performed by the third network device in the method embodiment.

When the apparatus 600 is configured to perform the method in FIG. 4A and FIG. 4B, the transceiver unit 610 may be configured to perform receiving and sending steps in the method, for example, step S421, and the processing unit 620 may be configured to perform processing steps in the method.

When the apparatus 600 is configured to perform the method in FIG. 5A and FIG. 5B, the transceiver unit 610 may be configured to perform receiving and sending steps in the method, for example, step S594, and the processing unit 620 may be configured to perform processing steps in the method, for example, step S595.

It should be understood that a specific process in which the units perform the foregoing corresponding steps is described in detail in the foregoing method embodiments, and for brevity, details are not described herein.

In still another design, the apparatus 600 is configured to perform actions performed by the fourth network device in the foregoing method embodiment.

The transceiver unit 610 is configured to receive an eighth message from a first network device, where the eighth message is used to request to obtain an internet IP address of a second terminal device in a first communication group.

The transceiver unit 610 is further configured to send the IP address to the first network device, where a first terminal device and the second terminal device belong to the first communication group, and the eighth message includes information about the second terminal device and a first parameter for identifying the first communication group.

Optionally, the transceiver unit 610 is further configured to receive a communication group establishment request message from the first network device, where the communication group establishment request message is used to request to establish the first communication group.

The processing unit 620 is further configured to create the first communication group, and allocate the first parameter to the first communication group. The sending unit is further configured to send the first parameter to the first network device.

Optionally, the transceiver unit 610 is further configured to send an eleventh message to a sixth network device, where the eleventh message is used to request to synchronously create the first communication group, and the eleventh message includes the first parameter, information about the first communication group, and an identifier of a terminal device in the first communication group. The information about the first communication group includes information for inter-group communication of the first communication group and information about an application managed by the first communication group.

The apparatus 600 may implement corresponding steps or procedures performed by the fourth network device in the method embodiment in embodiments of this application. The apparatus 600 may include units configured to perform the method performed by the fourth network device in the method embodiment. In addition, the units in the apparatus 600 and the foregoing other operations and/or functions are separately used to implement corresponding procedures performed by the fourth network device in the method embodiment.

When the apparatus 600 is configured to perform the method in FIG. 4A and FIG. 4B, the transceiver unit 610 may be configured to perform receiving and sending steps in the method, for example, steps S491, S493, and S495, and the processing unit 620 may be configured to perform processing steps in the method, for example, step S494.

When the apparatus 600 is configured to perform the method in FIG. 5A and FIG. 5B, the transceiver unit 610 may be configured to perform receiving and sending steps in the method, for example, steps S511, S530, S540, S560, S591, and S592, and the processing unit 620 may be configured to perform processing steps in the method, for example, step S520.

It should be understood that a specific process in which the units perform the foregoing corresponding steps is described in detail in the foregoing method embodiments, and for brevity, details are not described herein.

In still another design, the apparatus 600 is configured to perform actions performed by the sixth network device in the foregoing method embodiment.

The transceiver unit 610 is configured to receive an eleventh message from a fourth network device, where the eleventh message is used to request to synchronously create a first communication group, and the eleventh message includes a first parameter for identifying the first communication group, information about the first communication group, and an identifier of a terminal device in the first communication group.

The information about the first communication group includes information for inter-group communication of the first communication group and information about an application managed by the first communication group.

The transceiver unit 610 is further configured to send a twelfth message to a seventh network device, where the twelfth message is used to query subscription information of a first terminal device, and the first terminal device is a terminal device that requests to create the first communication group.

The processing unit 620 is configured to determine, based on the subscription information of the first terminal device, to establish the first communication group.

Optionally, the processing unit 620 is further configured to allocate an internal identifier to the first communication group, where the internal identifier is associated with the first parameter.

The transceiver unit 610 is further configured to send a thirteenth message to the seventh network device, where the thirteenth message includes an identifier of the first terminal device, the internal identifier, and the information about the first communication group.

Optionally, the transceiver unit 610 is further configured to receive a tenth message from a second network device, where the tenth message includes the first parameter, the identifier of the first terminal device, an identifier of a first session, an identifier of a fifth network device, and an internet protocol IP address of the first session.

The apparatus 600 may implement corresponding steps or procedures performed by the sixth network device in the method embodiment in embodiments of this application. The apparatus 600 may include units configured to perform the method performed by the sixth network device in the method embodiment. In addition, the units in the apparatus 600 and the foregoing other operations and/or functions are separately used to implement corresponding procedures performed by the sixth network device in the method embodiment.

When the apparatus 600 is configured to perform the method in FIG. 4A and FIG. 4B, the transceiver unit 610 may be configured to perform receiving and sending steps in the method, for example, steps S490 and S491, and the processing unit 620 may be configured to perform processing steps in the method.

When the apparatus 600 is configured to perform the method in FIG. 5A and FIG. 5B, the transceiver unit 610 may be configured to perform receiving and sending steps in the method, for example, steps S530, S540, and S550, and the processing unit 620 may be configured to perform processing steps in the method.

It should be understood that a specific process in which the units perform the foregoing corresponding steps is described in detail in the foregoing method embodiments, and for brevity, details are not described herein.

The processing unit 620 in the foregoing embodiment may be implemented by at least one processor or a processor-related circuit. The transceiver unit 610 may be implemented by a transceiver or a transceiver-related circuit. The storage unit may be implemented by at least one memory.

As shown in FIG. 7, an embodiment of this application further provides an apparatus 700. The apparatus 700 includes a processor 710, and may further include one or more memories 720. The processor 710 is coupled to the memory 720. The memory 720 is configured to store a computer program or instructions and/or data. The processor 710 is configured to execute the computer program or the instructions and/or the data stored in the memory 720, so that the method in the foregoing method embodiment is performed. Optionally, the apparatus 700 includes one or more processors 710.

Optionally, the memory 720 and the processor 710 may be integrated together, or disposed separately.

Optionally, as shown in FIG. 7, the apparatus 700 may further include a transceiver 730, and the transceiver 730 is configured to receive a signal and/or send a signal. For example, the processor 710 is configured to control the transceiver 730 to receive the signal and/or send the signal.

In a solution, the apparatus 700 is configured to implement operations performed by the devices (such as the foregoing core network elements and the foregoing terminal devices) in the foregoing method embodiments.

An embodiment of this application further provides a computer-readable storage medium. The computer-readable storage medium stores computer instructions for implementing the methods performed by the devices (such as the foregoing core network elements and the foregoing terminal devices) in the foregoing method embodiments.

For example, when a computer program is executed by a computer, the computer is enabled to implement the methods performed by the network devices in the foregoing method embodiments.

An embodiment of this application further provides a computer program product including instructions. When the instructions are executed by a computer, the computer is enabled to implement the methods performed by the devices (such as the foregoing core network elements and the foregoing terminal devices) in the foregoing method embodiments.

An embodiment of this application further provides a communication system. The communication system includes the devices (such as the foregoing core network elements and the foregoing terminal devices) in the foregoing embodiments.

For explanation and beneficial effect of related content in any apparatus provided above, refer to the corresponding method embodiment provided above. Details are not described herein again.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described in this specification aims to include but is not limited to these memories and any memory of another appropriate type.

A person of ordinary skill in the art may be aware that, in combination with the examples described in embodiments disclosed in this specification, units and methods can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the protection scope of this application.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to implement the solutions provided in this application.

In addition, functional units in embodiments of this application may be integrated into one unit, each of the units may exist alone physically, or two or more units may be integrated into one unit.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedures or functions according to embodiments of this application are all or partially generated. The computer may be a general-purpose computer, a special-purpose computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. The scope of the invention is however defined by the appended claims.

## Claims

1. A method for inter-device communication, comprising:
obtaining, by a first terminal device, a first parameter, wherein the first parameter identifies a first communication group, and the first terminal device belongs to the first communication group;
sending, by the first terminal device, a first message to a first network device, wherein
the first message comprises the first parameter and a session establishment request message, the session establishment request message is used to request to establish a first session, and the first session is used by the first terminal device to communicate with a second terminal device in the first communication group; and
receiving, by the first terminal device, a second message from the first network device, wherein the second message indicates acceptance of a request for establishing the first session,
wherein the method further comprises:
receiving, by the first terminal device, a second parameter from the first network device, wherein the second parameter comprises a parameter for describing an application, a parameter for describing the first communication group, and a route selection parameter for establishing the first session, wherein
the route selection parameter comprises at least one of a network slice, a service continuity mode, a data network name, a session type, and an access type,
wherein when the application corresponding to the parameter for describing the application matches an application run by the first terminal device, and the parameter for describing the first communication group matches the first parameter, the method further comprises:
determining, by the first terminal device, the route selection parameter for establishing the first session based on the application run by the first terminal device and the first parameter, wherein
the route selection parameter for establishing the first session is associated with the application run by the first terminal device and the first parameter.

2. The method according to claim 1, wherein the method further comprises:
sending, by the first terminal device, a third message to the first network device, wherein the third message is used to request to obtain an internet protocol IP address, and the IP address is an IP address of the second terminal device in the first communication group; and
receiving, by the first terminal device, the IP address from the first network device, wherein
the third message comprises an identifier of the second terminal device and the first parameter.

3. The method according to claim 1 or 2, wherein the method further comprises:
sending, by the first terminal device, a fourth message to the first network device, wherein the fourth message comprises a communication group establishment request message, and the communication group establishment request message is used to request to establish the first communication group; and
the obtaining, by a first terminal device, a first parameter comprises:
receiving, by the first terminal device, the first parameter from the first network device.

4. The method according to claim 3, wherein the fourth message further comprises an identifier of the first terminal device and a third parameter, and the third parameter indicates a function of the first terminal device in the first communication group.

5. The method according to claim 3 or 4, wherein the method further comprises:
sending, by the first terminal device, a fifth message to the first network device, wherein the fifth message is used to request to update or delete the first communication group, and
the fifth message comprises the first parameter; and
receiving, by the first terminal device, a sixth message from the first network device in response to the fifth message, wherein the sixth message comprises information indicating that an update succeeds or an update fails, or the sixth message comprises information indicating that deletion succeeds or deletion fails.

6. The method according to any one of claims 1 to 5, wherein the method further comprises:
communicating, by the first terminal device, with the second terminal device by using the first session.

7. An apparatus of a first terminal device for inter-device communication, the apparatus comprising units configured to perform the method according to any one of claims 1 to 6.

8. A computer-readable storage medium storing instructions, wherein when the instructions are run on a computer of a first terminal device, they cause the first terminal device to perform the method according to any one of claims 1 to 6.

## Patentansprüche

1. Verfahren zur Kommunikation zwischen Geräten, umfassend:
Erlangen, durch ein erstes Endgerät, eines ersten Parameters, wobei der erste Parameter eine erste Kommunikationsgruppe identifiziert und das erste Endgerät zu der ersten Kommunikationsgruppe gehört;
Senden, durch das erste Endgerät, einer ersten Nachricht an ein erstes Netzwerkgerät, wobei
die erste Nachricht den ersten Parameter und eine Sitzungseinrichtungs-Anforderungsnachricht umfasst, die Sitzungseinrichtungs-Anforderungsnachricht dazu verwendet wird, Einrichten einer ersten Sitzung anzufordern, und die erste Sitzung durch das erste Endgerät dazu verwendet wird, mit einem zweiten Endgerät in der ersten Kommunikationsgruppe zu kommunizieren; und
Empfangen, durch das erste Endgerät, einer zweiten Nachricht von dem ersten Netzwerkgerät, wobei die zweite Nachricht eine Annahme einer Anforderung zum Einrichten der ersten Sitzung angibt,
wobei das Verfahren ferner Folgendes umfasst:
Empfangen, durch das erste Endgerät, eines zweiten Parameters von dem ersten Netzwerkgerät wobei der zweite Parameter einen Parameter zum Beschreiben einer Anwendung, einen Parameter zum Beschreiben der ersten Kommunikationsgruppe und einen Routenauswahlparameter zum Einrichten der ersten Sitzung umfasst, wobei
der Routenauswahlparameter mindestens eines aus einem Netzwerk-Slice, einem Service-Continuity-Modus, einem Datennetzwerknamen, einem Sitzungstyp und einem Zugriffstyp umfasst,
wobei, wenn die Anwendung, die dem Parameter zum Beschreiben der Anwendung entspricht, mit einer Anwendung übereinstimmt, die durch das erste Endgerät ausgeführt wird, und der Parameter zum Beschreiben der ersten Kommunikationsgruppe mit dem ersten Parameter übereinstimmt, das Verfahren ferner Folgendes umfasst:
Bestimmen, durch das erste Endgerät, des Routenauswahlparameters zum Einrichten der ersten Sitzung basierend auf der Anwendung, die durch das erste Endgerät ausgeführt wird, und dem ersten Parameter, wobei
der Routenauswahlparameter zum Einrichten der ersten Sitzung mit der Anwendung, die durch das erste Endgerät ausgeführt wird, und dem ersten Parameter verknüpft ist.

2. Verfahren nach Anspruch 1, wobei das Verfahren ferner Folgendes umfasst:
Senden, durch das erste Endgerät, einer dritten Nachricht an das erste Netzwerkgerät, wobei die dritte Nachricht dazu verwendet wird, Erlangen einer Internetprotokoll-Adresse, IP-Adresse, anzufordern und die IP-Adresse eine IP-Adresse des zweiten Endgeräts in der ersten Kommunikationsgruppe ist; und
Empfangen, durch das erste Endgerät, der IP-Adresse von dem ersten Netzwerkgerät, wobei
die dritte Nachricht eine Kennung des zweiten Endgeräts und den ersten Parameter umfasst.

3. Verfahren nach Anspruch 1 oder 2, wobei das Verfahren ferner Folgendes umfasst:
Senden, durch das erste Endgerät, einer vierten Nachricht an das erste Netzwerkgerät, wobei die vierte Nachricht eine Anforderungsnachricht zum Einrichten einer Kommunikationsgruppe umfasst und die Anforderungsnachricht zum Einrichten einer Kommunikationsgruppe dazu verwendet wird, Einrichten der ersten Kommunikationsgruppe anzufordern; und
das Erlangen, durch ein erstes Endgerät, eines ersten Parameters Folgendes umfasst:
Empfangen, durch das erste Endgerät, des ersten Parameters von dem ersten Netzwerkgerät.

4. Verfahren nach Anspruch 3, wobei die vierte Nachricht ferner eine Kennung des ersten Endgeräts und einen dritten Parameter umfasst, und der dritte Parameter eine Funktion des ersten Endgeräts in der ersten Kommunikationsgruppe angibt.

5. Verfahren nach Anspruch 3 oder 4, wobei das Verfahren ferner Folgendes umfasst:
Senden, durch das erste Endgerät, einer fünften Nachricht an das erste Netzwerkgerät, wobei die fünfte Nachricht dazu verwendet wird, Aktualisieren oder Löschen der ersten Kommunikationsgruppe anzufordern, und
die fünfte Nachricht den ersten Parameter umfasst; und
Empfangen, durch das erste Endgerät, einer sechsten Nachricht von dem ersten Netzwerkgerät als Reaktion auf die fünfte Nachricht, wobei die sechste Nachricht Informationen umfasst, die angeben, dass eine Aktualisierung erfolgreich war oder eine Aktualisierung fehlgeschlagen ist, oder die sechste Nachricht Informationen umfasst, die angeben, dass eine Löschung erfolgreich war oder eine Löschung fehlgeschlagen ist.

6. Verfahren nach einem der Ansprüche 1 bis 5, wobei das Verfahren ferner Folgendes umfasst:
Kommunizieren, durch das erste Endgerät, mit dem zweiten Endgerät unter Verwendung der ersten Sitzung.

7. Vorrichtung eines ersten Endgeräts zur Kommunikation zwischen Geräten, wobei die Vorrichtung Einheiten umfasst, die dazu konfiguriert sind, das Verfahren nach einem der Ansprüche 1 bis 6 durchzuführen.

8. Computerlesbares Speichermedium, das Anweisungen speichert, wobei, wenn die Anweisungen auf einem Computer eines ersten Endgeräts ausgeführt werden, diese das erste Endgerät dazu veranlassen, das Verfahren nach einem der Ansprüche 1 bis 6 durchzuführen.

## Revendications

1. Procédé de communication entre dispositifs, comprenant :
l'obtention, par un premier dispositif terminal, d'un premier paramètre, dans lequel le premier paramètre identifie un premier groupe de communication, et le premier dispositif terminal appartient au premier groupe de communication ;
l'envoi, par le premier dispositif terminal, d'un premier message à un premier dispositif réseau, dans lequel
le premier message comprend le premier paramètre et un message de demande d'établissement de session, le message de demande d'établissement de session est utilisé pour demander l'établissement d'une première session, et la première session est utilisée par le premier dispositif terminal pour communiquer avec un second dispositif terminal dans le premier groupe de communication ; et
la réception, par le premier dispositif terminal, d'un deuxième message provenant du premier dispositif réseau, dans lequel le deuxième message indique l'acceptation d'une demande d'établissement de la première session,
dans lequel le procédé comprend également :
la réception, par le premier dispositif terminal, d'un deuxième paramètre provenant du premier dispositif réseau, dans lequel le deuxième paramètre comprend un paramètre pour décrire une application, un paramètre pour décrire le premier groupe de communication et un paramètre de sélection d'itinéraire pour l'établissement de la première session, dans lequel
le paramètre de sélection d'itinéraire comprend au moins l'un d'une tranche de réseau, d'un mode de continuité de service, d'un nom de réseau de données, d'un type de session et d'un type d'accès,
dans lequel, lorsque l'application correspondant au paramètre de description de l'application correspond à une application exécutée par le premier dispositif terminal, et que le paramètre de description du premier groupe de communication correspond au premier paramètre, le procédé comprend également :
la détermination, par le premier dispositif terminal, du paramètre de sélection d'itinéraire pour l'établissement de la première session sur la base de l'application exécutée par le premier dispositif terminal et du premier paramètre, dans lequel le paramètre de sélection d'itinéraire pour l'établissement de la première session est associé à l'application exécutée par le premier dispositif terminal et le premier paramètre.

2. Procédé selon la revendication 1, dans lequel le procédé comprend également :
l'envoi, par le premier dispositif terminal, d'un troisième message au premier dispositif réseau, dans lequel le troisième message est utilisé pour demander l'obtention d'une adresse IP de protocole Internet, et l'adresse IP est une adresse IP du second dispositif terminal dans le premier groupe de communication ; et
la réception, par le premier dispositif terminal, de l'adresse IP du premier dispositif réseau, dans lequel
le troisième message comprend un identifiant du second dispositif terminal et le premier paramètre.

3. Procédé selon la revendication 1 ou 2, dans lequel le procédé comprend également :
l'envoi, par le premier dispositif terminal, d'un quatrième message au premier dispositif réseau, dans lequel le quatrième message comprend un message de demande d'établissement de groupe de communication, et le message de demande d'établissement de groupe de communication est utilisé pour demander l'établissement du premier groupe de communication ; et
l'obtention, par un premier dispositif terminal, d'un premier paramètre comprend :
la réception, par le premier dispositif terminal, du premier paramètre en provenance du premier dispositif réseau.

4. Procédé selon la revendication 3, dans lequel le quatrième message comprend également un identifiant du premier dispositif terminal et un troisième paramètre, et le troisième paramètre indique une fonction du premier dispositif terminal dans le premier groupe de communication.

5. Procédé selon la revendication 3 ou 4, dans lequel le procédé comprend également :
l'envoi, par le premier dispositif terminal, d'un cinquième message au premier dispositif réseau, dans lequel le cinquième message est utilisé pour demander la mise à jour ou la suppression du premier groupe de communication, et
le cinquième message comprend le premier paramètre ; et
la réception, par le premier dispositif terminal, d'un sixième message provenant du premier dispositif réseau en réponse au cinquième message, dans lequel le sixième message comprend des informations indiquant qu'une mise à jour réussit ou qu'une mise à jour échoue, ou le sixième message comprend des informations indiquant que la suppression réussit ou que la suppression échoue.

6. Procédé selon l'une quelconque des revendications 1 à 5, dans lequel le procédé comprend également :
la communication, par le premier dispositif terminal, avec le second dispositif terminal à l'aide de la première session.

7. Appareil d'un premier dispositif terminal pour la communication entre dispositifs, l'appareil comprenant des unités configurées pour réaliser le procédé selon l'une quelconque des revendications 1 à 6.

8. Support de stockage lisible par ordinateur stockant des instructions, dans lequel, lorsque les instructions sont exécutées sur un ordinateur d'un premier dispositif terminal, elles amènent le premier dispositif terminal à réaliser le procédé selon l'une quelconque des revendications 1 à 6.
